# EUROPEAN PATENT SPECIFICATION

(11) **EP 3 615 604 B1**
(45) Date of publication and mention of the grant of the patent: **24.02.2021**
(21) Application number: 19724881.8
(22) Date of filing: 23.04.2019
(51) Int. Cl.: C08L 1/14

(54) **HOMOGENOUS POLYMER MIXTURE, METHOD RELATED THERETO AND USE THEREOF**
HOMOGENE POLYMERMISCHUNG, RELEVANTE METHODEN UND ANWENDUNGEN
MÉLANGE POLYMÈRE HOMOGÈNE, MÉTHODE ASSOCIÉE ET SON UTILISATION

(30) Priority: 23.04.2018 FI 20185381; 14.12.2018 FI 20186082
(43) Date of publication of application: 04.03.2020
(73) Proprietor: Woodly Oy, 00520 Helsinki (FI)
(72) Inventor: ANTTILA, Upi, 02130 Espoo (FI); ASIKAINEN, Martta, 02130 Espoo (FI); IMMONEN, Kirsi, 33101 Tampere (FI); KAMINEN, Jaakko, 02130 Espoo (FI); LAINE, Christiane, 02044 VTT (FI); VUORINEN, Tommi, 33101 Tampere (FI)
(74) Representative: Papula Oy
(86) International application number: PCT/FI2019/050323
(87) International publication number: WO 2019/207204

(56) References cited:
- WO-A1-2010/051589
- CN-A- 107 793 589
- CN-A- 107 793 710
- JP-A- 2018 024 781
- TACHIBANA Y ET AL: "Cellulose acetate butyrate as multifunctional additive for poly(butylene succinate) by melt blending: Mechanical properties, biomass carbon ratio, and control of biodegradability", POLYMER DEGRADATION AND STABILITY, BARKING, GB, vol. 95, no. 8, 1 August 2010 (2010-08-01) , pages 1406-1413, XP027122913, ISSN: 0141-3910 [retrieved on 2010-07-05]
- UESAKA T ET AL: "Structure and physical properties of poly(butylene succinate)/cellulose acetate blends", POLYMER, ELSEVIER SCIENCE PUBLISHERS B.V, GB, vol. 41, no. 23, 1 November 2000 (2000-11-01), pages 8449-8454, XP004209767, ISSN: 0032-3861, DOI: 10.1016/S0032-3861(00)00206-8

## Description

### FIELD OF THE INVENTION

The invention concerns a homogenous polymer mixture comprising a polymer composition, use thereof, as well as a packaging material manufactured thereof, and a method for manufacturing a packaging material. Especially, the invention concerns a homogenous polymer mixture comprising a polymer composition, which composition comprises cellulose acetate propionate (CAP), and at least one other polymer selected from the group consisting of polybutylene succinate (PBS) and polypropylene succinate (PPS), wherein the total amount of said cellulose ester polymer and said at least one other polymer is at least 80 wt.% based on the total weight of the polymer composition, obtained by processing said polymer composition at a temperature of at least 210°C

### BACKGROUND OF THE INVENTION

To ensure an environmentally sustainable development, plastic materials made from fossil raw materials, such as petroleum or natural gas, need to be replaced with new environmentally friendly materials. These new materials are often called bioplastics.

Several new synthetic bioplastic materials have been developed. These synthetic materials are not necessarily based on renewable resources; and they may have been made biodegradable in an artificial way. Bioplastics are thus commonly divided into two separate groups: natural and synthetic polymers. Natural polymers are based on biopolymers, for example proteins or polysaccharides (i.e. starch and cellulose). Synthetic biopolymers are for example aliphatic polyesters, polyanhydrides, polyortoesters, water soluble polyvinyl alcohols and certain polyurethanes. Biodegradable materials are typically defined as a mass that degrades in a reasonable time, either by bacterial enzyme activity or by hydrolytic degradation.

One large field, where raw materials from fossil sources are still used, is packing and wrapping materials such as plastic materials (polyethylene, polypropylene etc.). Most household plastic packages and wraps are made from polyethylene (PE), polyvinyl chloride (PVC), or polyvinylidene chloride (PVDC) derived from hydrocarbons. Packages made from plastic are used for a wide range of purposes, such as are for packing food or other consumer goods. Such wrapping or packing materials need to be replaced with environmentally friendly alternatives. In many applications, it is important that the material is transparent to show the product and to make it attractive to the consumer.

Cellulose is a natural polymer and is considered a renewable resource. Known cellulose based materials are for example Cellophane, Celluloid, Transparit, Cellidor, and Cellblend. Cellulose based materials are typically biodegradable. However, many of these materials have not been considered economically feasible compared to petroleum based products. Thereto, they have had other disadvantages relating to processability etc. Cellulose acetate, cellulose acetobutyrate, benzyl cellulose, and ethyl cellulose, for example, need high DS to obtain melt processability. Thermoplasticity and biodegradability are not always compatible.

Publication WO9209654 A1 discloses binary blends of cellulose esters and aliphatic-aromatic copolyesters, cellulose esters and aliphatic polymeric compounds.

Publication US5594068 A discloses cellulose ester blends which are useful in the preparation of environmentally nonpersistent, dimensionally stable articles.

Although some new bioplastics have been developed to replace petroleum based plastic materials, there is still a constant need for finding new sustainable solutions to ensure a sustainable development and to alleviate waste problems related to packaging materials and plastics. Especially, there is a need to develop materials for various purposes which are of good quality; with properties that are as good or better compared to packaging materials based purely on fossil resources. Further, there is a need to develop bioplastic materials which are recyclable.

### SUMMARY OF THE INVENTION

The objective of the invention is to achieve a solution to the above-mentioned problems. Especially, the objective of the invention is to bring forth a polymer composition based mainly on renewable materials, which can be used to form a homogenous polymer mixture, and to manufacture materials suitable for various packaging related applications. It is essential that the materials, which can be produced from the homogenous mixture have properties that are as good or better compared to packaging materials based purely on fossil resources. The new composition and the materials manufactured therefrom could replace packaging materials based on purely fossil raw materials. Thus, the composition, the mixture comprising it and materials manufactured therefrom provide a more sustainable packaging material option for grocers and consumers.

The objectives of the invention are accomplished with a homogenous polymer mixture comprising a polymer composition, method and use having the characteristics as mentioned in the independent claims. The preferred embodiments of the invention are presented in the dependent claims.

One objective of the invention is thus to provide a polymer composition, which can form a homogenous mixture, and which comprises at least one cellulose ester polymer, which is cellulose acetate propionate (CAP) at 55-95%, and at least one other polymer selected from the group consisting of polybutylene succinate (PBS) and polypropylene succinate (PPS) at 5-40%.

The total amount of the cellulose acetate propionate polymer and the at least one other polymer is at least 80 weight-% based on the total weight of the polymer composition. Said homogenous mixture is obtained by processing said polymer composition at a temperature of at least 210°C

The present invention also concerns a packaging material and/or a substantially clear and transparent material, which comprises the homogenous polymer mixture comprising a polymer composition according to the invention. In addition, the present invention concerns use of the homogenous polymer mixture comprising a polymer composition according to the invention for the manufacture of a packaging material.

The present invention further concerns a method for manufacturing a packaging material. The method comprises the following steps:
a. melt mixing, at a temperature of at least 210°C a polymer composition comprising at least one cellulose ester polymer, which is cellulose acetate propionate (CAP) at 55-95%, and at least one other polymer selected from the group consisting of polybutylene succinate (PBS) and polypropylene succinate (PPS) at 5-40%, wherein the total amount of said cellulose ester polymer and said at least one other polymer is at least 80 wt.% based on the total weight of the polymer composition, to obtain a homogenous polymer mixture,
b. optionally granulating the homogenous mixture to obtain a granulated polymer mixture, and
c. producing a packaging material from said homogenous polymer mixture and/or said granulated polymer mixture.

The invention is based on the finding that an environmentally friendly homogenous polymer mixture obtained from the composition of good quality, especially concerning properties like tensile strength and rigidity (modulus), can be prepared from a mixture comprising at least one cellulose ester polymer, which is cellulose acetate propionate, and at least one other polymer selected from the group consisting of PBS and PPS. It was surprisingly found that this combination of polymers provides a very high-quality material, which is suitable for various packaging material applications. The tensile strength and/or rigidity, especially when combined with excellent transparency and clarity, makes the material suitable to replace several traditional fossil-based materials, for example PE-HD, PP, PET or PS. An important advantage with the homogenous polymer mixture obtained from the polymer composition of the invention is thus its high quality.

One advantage with the homogenous polymer mixture obtained from the composition according to the invention is that it can be processed in conventional machines, which are now used to manufacture and process thermoplastic materials. Thus, no expensive apparatus investments need to be made.

Another advantage with the present invention is that the raw-materials can be of food-grade quality, which makes the materials produced from the composition according to the invention suitable for packaging food and/or medical product.

In addition, the homogenous mixture is suitable for several different material applications. The mixture comprising the composition also has good heat resistance, which enables the use in different applications.

Yet another advantage with the homogenous polymer mixture obtained from the composition of the present invention is that it may be recycled.

### SHORT DESCRIPTION OF THE FIGURES

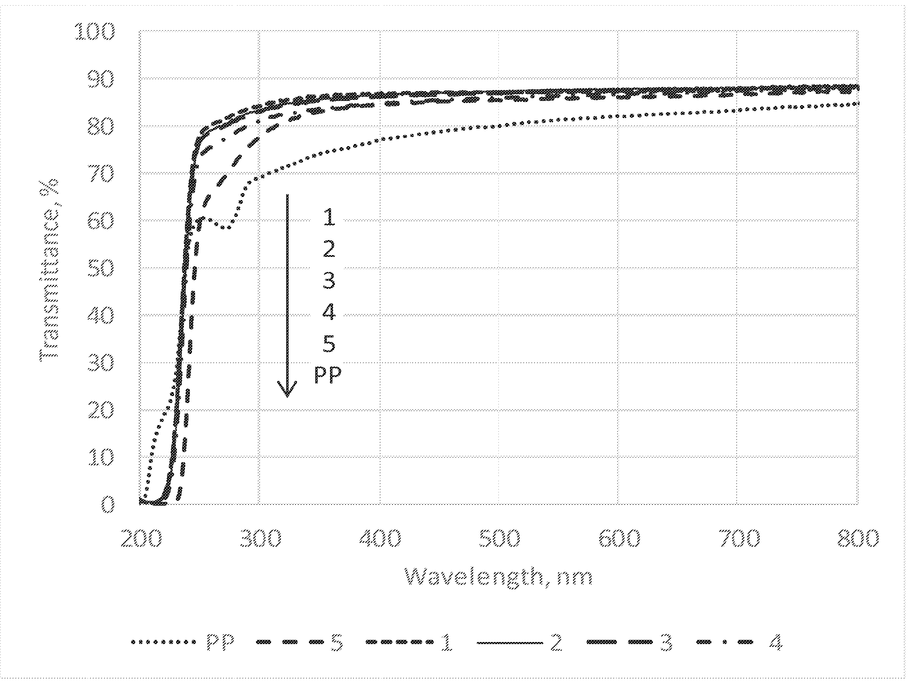

In the following, the invention is illustrated more closely by figure referring to the enclosed figure 1, which shows a comparison between transparency of materials produced from the homogenous polymer mixture obtained from the composition according to the invention and PP.

### DEFINITIONS

In the present application and claims the following terms and expressions have the meanings as defined below.

"Homogenous polymer mixture" is a blend comprising two or more thermoplastic polymers. The homogeneous polymer mixture has only one phase. It also can have different physical properties compared to the mixture's component polymers in pure state. For example, in the invention, CAP and PBS and/or PPS together form a homogeneous polymer mixture, which has different properties than the polymers separately.

"Cellulose based" is defined as comprising polymers obtained from cellulose containing material. The polymers obtained from cellulose derived from cellulose containing material are thus biopolymers. The cellulose based polymers are typically derivatives, such as ethers or esters of cellulose. Cellulose esters may be produced partly using chemicals, which are not derived from cellulose based materials nor from renewable resources. The cellulose containing material can be obtained from various raw materials, for example wood, bark or leaves of plants, or from a plant-based material. In general, cellulose based i.e. cellulosic polymers are renewable resources. "Cellulose esters" are derived from cellulosic materials and are thus examples of cellulose based polymers. The hydroxyl groups (-OH) of cellulose can be partially or fully reacted with various reagents. This way, a large number of derivatives with useful properties may be formed, mainly cellulose esters and cellulose ethers (-OR). "Cellulose acetate propionate" (CAP) polymer is a cellulose derivative and an example of a specific cellulose ester. It is produced by esterification of some hydroxyl groups in the cellulose polymer chain on the repeating glucose units. Cellulose acetate propionate is commonly used as binder and additive in coatings applications for a variety of substrates. These products offer a wide range of properties based on their propyl, acetyl and hydroxy contents.

"Packaging material" or "packaging article" may be for example cling film, shrink film, stretch film, bag film or container liners, films meant for consumer packaging (e.g. packaging film for frozen products, shrink film for transport packaging, food wrap film, packaging bags, or form, fill and seal packaging film), laminating film (e.g. laminating of aluminum or paper used for packaging for example milk or coffee), barrier film (e.g. film acting as an aroma or oxygen barrier used for packaging food, e.g. cold meats and cheese), extrusion coating applications, films for the packaging of medical products, agricultural film (e.g. greenhouse film, crop forcing film, silage film, silage stretch film), bag, box, container, casing, housing or molded 3D-objects, and/or other applications in packaging goods, such as food, medical products or cosmetics.

"Blow film process" or "film blowing process" or "blow film extrusion" is one of the most common methods of film manufacture. The blown film process is also sometimes referred to as the tubular film extrusion. The process involves extrusion of a plastic through a circular die, followed by "bubble-like" expansion.

"Cast film process" or "cast film extrusion" is a method to form a sheet from plastic. The molten polymer is usually extruded through a slot die onto an internally cooled chill roll and then passes through rollers, which will determine the nature and properties of the cast film (thickness etc.). The end product can include a vast range of colors, finishes, laminations and printing.

"Injection molding" is a process to produce a molded article, wherein molten polymer is injected into a mold tool that defines the shape of the molded article to be manufactured.

"Recyclable" means having the ability to be converted from used/waste materials into new materials, articles or objects. A material can be recycled for example by melting the material and forming new objects. In one aspect, recyclability means that the mechanical properties of the material will not essentially change during the processing related to recycling.

### DETAILED DESCRIPTION OF THE INVENTION

The present invention concerns a composition, which is environmentally friendly since it can be made mainly out of renewable resources. The new composition can be formed into homogenous polymer mixture, suitable for manufacturing packaging materials or packaging films and it can be used for wrapping and packing to replace commonly used fossil plastic materials, which are based on e.g. polyethylene or polypropylene. The new composition comprises a mixture of at least one cellulose ester polymer, which is cellulose acetate propionate, and at least one of the polymers selected from the group consisting of polybutylene succinate (PBS) and polypropylene succinate (PPS). The new composition is suitably an environmentally friendly bioplastic material.

In tests performed in connection with the present invention, the inventors found that the combination in the composition of the invention provides very high-quality bioplastic materials. As presented in the examples, especially the tensile stress and rigidity (modulus) properties were very high for the materials. This ensures that the materials have good processability properties in conventional processes for producing plastics articles and films. The materials can also be used as printing substrate, i.e. graphics can be printed on the material. In addition, they have excellent transparency, i.e. material is clear, which is quite unusual for bioplastics. It is important for the high quality that the composition can form a homogenous polymer mixture. The tests also showed that in addition to transparency, the produced materials were colorless. Articles and products that can be manufactured from the composition of the present invention are various packaging materials, articles and containers, for example plastic films or foils or molded 3D articles (containers, boxes etc.). When packing consumer goods, it is often very important that the materials have good transparency and clarity to make the products more attractive for the consumer. The materials of the present invention could thus be used to replace conventional materials such as PE-HD, PP, PET and PS plastics.

The good properties of the homogenous polymer mixture and the materials produced therefrom are believed to be due to synergistic effects of the polymer raw-materials used, i.e. the combination of the cellulose ester polymer and the at least one other polymer. The combination in the composition according to the invention gives better mechanical qualities than the raw materials alone. In tests performed in connection with the invention (see Examples), the miscibility of the raw materials was excellent. Although the PBS polymer used in the tests itself is not clear, when mixed with CAP, the combination showed even better transparency and clarity that CAP alone. The inventors noticed that in the tests PBS functions as a softener for the cellulose ester polymer (CAP in the Examples), eliminating the need to use separate softeners or plasticizers. The other similar polymer PPS is expected to function similarly due to its similar structure to PBS. The cellulose ester alone is quite brittle, but in combination with the other polymer (such as PBS) the mechanical properties were clearly improved. This is probably because the formation of internal hydrogen bonds is reduced in the cellulose ester, when mixed with the other polymer. One advantage is further, that less additives are required if softeners are not necessary. The good quality of this combination was surprising, especially, because the prior art teaches that CAP and PBS are not compatible.

Accordingly, the present invention concerns a homogenous polymer mixture comprising a polymer composition, which comprises at least one cellulose ester polymer, which is cellulose acetate propionate (CAP), and at least one other polymer selected from the group consisting of polybutylene succinate (PBS) and polypropylene succinate (PPS). The total amount of the cellulose ester polymer and the at least one other polymer is at least 80 wt.% based on the total weight of the polymer composition, wherein the homogenous polymer mixture is obtained by processing said polymer composition at a temperature of at least 200°C.

According to one embodiment of the invention, the present invention concerns a homogenous polymer mixture for manufacturing a packaging material, which consists of at least one cellulose ester polymer, which is cellulose acetate propionate, and at least one other polymer selected from the group consisting of PPS and PBS, and optionally additives such as softeners, pigments, stabilizers and/or other additives for use in plastic compositions.

According to one embodiment, the homogenous polymer mixture comprising a polymer composition comprises cellulose ester polymer in an amount of 55 to 95 weight-%, preferably 55 to 90 weight-%, more preferably 55 to 80 weight-%, and at least one other polymer in an amount of 5 to 40 weight-%, preferably 10 to 40 weight-%, more preferably 20 to 40 weight-%, based on the total weight of the polymer composition.

According to one embodiment, the total amount of the cellulose ester polymer and the at least one other polymer it at least 85 wt.%, preferably at least 90 wt.%, based on the total weight of the polymer composition the rest being other polymers and/or additives such as softeners, pigments, stabilizers and/or other additives for use in plastic compositions.

According to one embodiment, the homogenous polymer mixture comprising a polymer composition comprises at least one softener, preferably triethyl citrate (TEC).

According to one embodiment, the at least one other polymer in the homogenous polymer mixture comprising a polymer composition according to the invention is polybutylene succinate (PBS). In that case, preferably, the PBS has a number average molar mass in the range of 30,000 to 100,000 Da; preferably 50,000 to 80,000 Da; more preferably 60,000 to 70,000 Da.

According to one embodiment, the homogenous polymer mixture comprising a polymer composition of the invention comprises cellulose ester polymer, which is cellulose acetate propionate (CAP) in an amount of 55 to 80 weight-%, preferably 60 to 75 weight-%, more preferably 65 to 75 weight-%, and at least one other polymer selected from the group consisting of polybutylene succinate (PBS) and polypropylene succinate (PPS) in an amount of 20 to 40 weight-%, preferably 25 to 40 weight-%, more preferably 25 to 35 weight-%, based on the total weight of the composition, and optionally at least one additive such as softeners, pigments, stabilizers and/or other additives for use in plastic compositions.

According to one embodiment, the homogenous polymer mixture comprising a polymer composition of the invention comprises cellulose acetate propionate in an amount of 55 to 80 weight-%, preferably 60 to 75 weight-%, more preferably 65 to 75 weight-%, and polybutylene succinate in an amount of 20 to 40 weight-%, preferably 25 to 40 weight-%, more preferably 25 to 35 weight-%, based on the total weight of the composition, and optionally at least one additive such as softeners, pigments, dyes, stabilizers and/or other additives for use in plastic compositions.

According to one embodiment, the homogenous polymer mixture comprising a polymer composition of the invention consists of cellulose acetate propionate in an amount of 55 to 80 weight-%, preferably 60 to 75 weight-%, more preferably 65 to 75 weight-%, and polybutylene succinate in an amount of 20 to 40 weight-%, preferably 25 to 35 weight-%, based on the total weight of the composition, and optionally at least one additive such as softeners, pigments, dyes, stabilizers and/or other additives for use in plastic compositions.

According to one embodiment, the cellulose ester in the homogenous polymer mixture comprising a polymer composition of the invention has a number average molar mass of 30,000 to 110,000 Da; preferably 50,000 to 100,000 Da; more preferably 65,000 to 95,000 Da.

According to one embodiment, the cellulose ester has an acetyl content of 0.8 to 2.0 wt.%, more preferably 1.0 to 1.5 wt.%, and/or a propionyl content of 30 to 51 wt.%, more preferably 40 to 50 wt.%, and/or a hydroxyl content of 1.0 to 2.5 wt.%, more preferably 1.5 to 2.0 wt.%.

The invention also concerns a substantially clear and transparent material that comprises the homogenous polymer mixture comprising a polymer composition according to the invention.

The present invention also concerns a packaging material, which comprises the homogenous polymer mixture comprising a polymer composition according to the invention. The invention also concerns a method related to producing the packaging material. Five specific embodiments of the packaging material and the method for producing the packaging material are presented below.
1) According to one embodiment, the packaging material is paper or cardboard material extrusion coated with the homogenous mixture comprising a polymer composition according to the invention. The temperature used in the extrusion coating may be 210°C to 300°C, preferably 210°C to 260°C, most preferably 225°C to 250°C. The adhesion can be tuned with processing temperatures and added glue or polymer layers. A "peel-off" application or stronger adhesion are both possible depending on the requirements of the application.
   According to a preferred extrusion coating embodiment, the homogenous polymer mixture comprises a polymer composition comprising cellulose ester polymer in an amount of at least 50 weight-%, preferably 60 to 90 weight-%, more preferably 60 to 75 weight-%, and at least one other polymer in an amount of 50 weight-% or less, preferably 10 to 40 weight-%, more preferably 25 to 40 weight-% based on the total weight of the polymer composition, and optionally additives. In tests performed in connection with the present invention, these ratios gave the highest quality products. Preferably, the polymer composition comprises CAP in combination with PBS as the at least one other polymer.
2) According to one embodiment, the packaging material is an injection molded product. The temperature used in the injection molding may be 210°C to 300°C, preferably 210°C to 250°C, most preferably 210°C to 230°C. According to a preferred injection molding embodiment, the homogenous polymer mixture comprises a polymer composition comprising cellulose ester polymer in an amount of at least 50 weight-%, preferably 60 to 95 weight-%, more preferably 65 to 90 weight-%, and at least one other polymer in an amount of 50 weight-% or less, preferably 5 to 40 weight-%, more preferably 10 to 35 weight-% based on the total weight of the polymer composition. In tests performed in connection with the present invention, these ratios gave the highest quality products. According to a very specific embodiment, the amount of cellulose ester is 70 weight-% or about 70 weight-% and the amount of the at least one other polymer is 30 weight-% or about 30 weight-%. Preferably, the polymer composition comprises CAP in combination with PBS as the at least one other polymer.
3) According to one embodiment, the packaging material is a product produced by a deep-drawing application. The temperature used in the deep-drawing application may be 210°C to 500°C. Thus, the homogenous polymer mixture of the invention can withstand temperatures up to 500°C. In tests performed in connection with the present invention temperatures in these ranges were used and the appropriate temperature depended on the equipment and processing parameters, such as time. Deep-drawing is thermo-forming. In deep-drawing applications the depth of the drawn part typically at least partly exceeds its diameter. The deep-drawn objects are formed by mechanical action forming 3D shapes of the material.
   According to a preferred deep-drawing embodiment, the homogenous polymer mixture comprises a polymer composition comprising cellulose ester polymer in an amount of at least 50 weight-%, preferably 50 to 95 weight-%, more preferably 60 to 85 weight-%, and at least one other polymer in an amount of 50 weight-% or less, preferably 5 to 50 weight-%, more preferably 15 to 40 weight-% based on the total weight of the polymer composition, and optionally additives. In tests performed in connection with the present invention, these ratios gave the highest quality products. Preferably, the polymer composition comprises CAP in combination with PBS as the at least one other polymer.
4) According to one embodiment, the packaging material is a product produced by a film blowing process. The temperature used in the film blowing process may be between 210°C and 250°C, preferably between 210°C and 230°C.
   According to a preferred film blowing process embodiment, the homogenous polymer mixture comprises a polymer composition comprising cellulose ester polymer in an amount of at least 50 weight-%, preferably 60 to 90 weight-%, more preferably 60 to 75 weight-%, and at least one other polymer in an amount of 50 weight-% or less, preferably 10 to 40 weight-%, more preferably 25 to 40 weight-% based on the total weight of the polymer composition, and optionally additives. In tests performed in connection with the present invention, these ratios gave the highest quality products. Preferably, the polymer composition comprises CAP in combination with PBS as the at least one other polymer.
5) According to one embodiment, the packaging material from said homogenous polymer mixture and/or said granulated polymer mixture is performed by cast film processing, wherein the cast film processing is performed at a temperature of 210°C and 250°C, preferably between 210°C and 230°C, more preferably between 210 and 225°C.

According to one cast film processing embodiment, the homogenous polymer mixture comprises a polymer composition comprising cellulose ester polymer in an amount of at least 50 weight-%, preferably 60 to 95 weight-%, more preferably 70 to 95 weight-%, and at least one other polymer in an amount of 50 weight-% or less, preferably 1 to 40 weight-%, more preferably 5 to 30 weight-% based on the total weight of the polymer composition, and optionally additives. A part of the PBS may optionally be replaced by additives, such as 1 to 10 weight-% based on the total amount of the composition. In tests performed in connection with the present invention, these ratios gave the highest quality products. Preferably, the polymer composition comprises CAP in combination with PBS as the at least one other polymer.

In addition, the present invention concerns use of the homogenous polymer mixture comprising a polymer composition according to the invention for the manufacture of a packaging material, selected from for example cling film, shrink film, stretch film, bag film or container liners, films meant for consumer packaging (e.g. packaging film for frozen products, shrink film for transport packaging, food wrap film, packaging bags, or form, fill and seal packaging film), laminating film (e.g. laminating of aluminum or paper used for packaging for example milk or coffee), barrier film (e.g. film acting as an aroma or oxygen barrier used for packaging food, e.g. cold meats and cheese), extrusion coating, films for the packaging of medical products, agricultural film (e.g. greenhouse film, crop forcing film, silage film, silage stretch film), bag, box, container, casing, housing or molded 3D-objects, and/or other applications in packaging goods, such as food, medical products or cosmetics.

Suitably, the number average molar mass of the at least one cellulose ester, i.e. the cellulose acetate propionate polymer, is above 20,000 Da. According to one embodiment, the number average molar mass is between 30,000 to 110,000 Da, preferably between 50,000 to 100,000 Da, more preferably 65,000 to 95,000 Da. The number average molar mass may be between 85,000 and 95,000 Da, or between 85,000 and 91,000 Da, for example 90,000 Da, 91,000 Da or 92,000 Da. If the molar masses of all components are too low, there is a risk that the composition will not be suitable for extrusion and blow film processing, because the material will not be strong or resilient enough for the blow film process. Thus, a number average molar mass within the above defined ranges will provide a resilient material with mechanical properties that withstand processing.

All number average molar mass measurements performed in connection with the invention were measured with size exclusion chromatography (SEC) using chloroform eluent for the number average molar mass measurements. The SEC measurements were performed in chloroform eluent (0.6 ml/min, T=30 °C) using Styragel HR 4 and 3 columns with a pre-column. The elution curves were detected using Waters 2414 Refractive index detector. The molar mass distributions (MMD) were calculated against 10 x PS (580 - 3040000 g/mol) standards, using Waters Empower 3 software.

Different grades of cellulose esters, such as cellulose acetate propionate, are commercially available from several suppliers. In the composition according to the invention, the mixture of the polymer raw materials affects the properties of the formed composition. In other words, the combined properties of the polymers need to be evaluated when forming the composition according to the invention. For example, if one of the polymers has a high number average molar mass, such as 90,000 Da or 70,000 Da, it could be suitable to combine this polymer with another polymer having a lower number average molar mass. Alternatively, or additionally, a higher amount of softener may be used together with polymers with a high molar mass. The suitable number average molar mass depends on the end use of the composition, i.e. the most suitable cellulose ester grade may be different depending on if the aim is to manufacture e.g. a film material or a molded article, such as a container.

The cellulose ester polymer used in the solutions according to the present invention is cellulose acetate propionate, CAP. Cellulose esters may have different grades of substitution. The CAP suitable for the composition of the present invention preferably has an acetyl content of 0.8 to 2.0 wt.%, more preferably 1.0 to 1.5 wt.%, for example 1.3 wt.%. The CAP suitable for the composition of the present invention preferably has a propionyl content of 30 to 51 wt.%, more preferably 40 to 50 wt.%, for example 48 wt.%. The CAP suitable for the composition of the present invention preferably has hydroxyl content of 1.0 to 2.5 wt.%, more preferably 1.5 to 2.0 wt.%, for example 1.7 wt.%. In addition, the glass transition temperature is preferably 140 to 155 °C, more preferably 142 to 152 °C, for example 147 °C.

According to one embodiment, the at least one other polymer is polybutylene succinate, PBS. The PBS suitable for the composition of the present invention preferably has a number average molar mass in the range of 30,000 to 100,000 Da; preferably 50,000 to 80,000 Da; more preferably 60,000 to 70,000 Da. The number average molar mass of the PBS may be for example 65,000 to 70,000 Da, such as for example 68,000 Da, 69,000 Da or 70,000 Da.

Melt flow index (or melt flow rate) is a measure to describe ease of flow of the melt of a thermoplastic polymer or plastic. The melt flow index can be used to characterize a polymer or a polymer mixture. For polyolefins, i.e. polyethylene (PE, at 190 °C) and polypropylene (PP, at 230 °C) the MFI is commonly used to indicate order of magnitude for its melt viscosity. In standardized MFI measuring instrument a constant pressure generates shear stress which pushes melt plastic through a die. Typically, MFI is inversely proportional to molecular weight. For the polymer mixture comprising a polymer composition of invention the MFI was measured at two temperatures 215 and 240 °C. According to one very specific embodiment, the homogenous polymer mixture of the invention has a melt flow index of 6 to 8 g/10 min, or preferably about 7 g/10 min, or 6.9 g/10 min, load 2.16 kg, at 215 °C, and/ or about 26 to 28 g/10 min, 27 g/10 min, or 27.1 g/10 min, load 2.16 kg, at 240 °C.

The polymers of the composition according to the present invention are suitably thermoplastic polymers. To be suitable for use in a packaging material, the polymers used in the composition of the present invention should not be water-soluble. Thus, the polymers are suitably not soluble in water. Thus, according to one aspect, the polymers used in the composition of the present invention are thermoplastic and non-water-soluble. There may exist other cellulose based polymers, which have similar properties as cellulose acetate propionate and/or cellulose acetate butyrate, and which also are suitable for the composition according to the inventions. Thus, the composition according to the invention may comprise also other cellulose based polymers, such as cellulose acetate butyrate (CAB).

According to one embodiment, the homogenous polymer mixture comprising a polymer composition according to the invention comprises another component, which is selected from the list consisting of a cellulose ester, such as cellulose acetate or cellulose acetate butyrate (CAB), an aliphatic or aliphatic aromatic polyester, such as polybutylene succinate adipate (PBSA) or polybutylene adipate terephthalate (PBAT), a polyhydroxyalkanoate (PHA), such as polyhydroxybutyrate (PHB), polylactic acid (PLA), and polycaprolactone (PCL). According to one embodiment, the homogenous polymer mixture comprising a polymer composition according to the invention comprises also other similar polymers, which are compatible with CAP and PBS and/or PPS.

The composition according to the present invention may also comprise other components, such as additives typically used in plastics. These additives are for example softeners or plasticizers, fillers, aids, pigments, stabilizers or other agents. Typically, the amounts of these additives vary between 0.01 to 10 weight-% based on the weight of the composition. The amount of one additive may for example be 0.1 to 5 weight-% based on the weight of the composition.

The present invention also relates to a packaging material, which comprises the homogenous polymer mixture comprising a polymer composition according to the invention.

According to one embodiment, the homogenous polymer mixture comprising a polymer composition according to the invention may be processed into a film using either blow film extrusion (film blowing process) or cast film extrusion.

According to one embodiment the polymer composition is biodegradable. The new packaging material manufactured from the homogenous polymer mixture comprising the polymer composition may also be biodegradable. In order to be biodegradable according to a certain standard, biodegradability enhancing additives may be added to the composition.

The polymer composition of the invention may contain other aliphatic polyesters in addition to PBS and/or PPS, such as polybutylene succinate adipate, (PBSA), polyhydroxybutyrate, poly(hexamethylene glutarate), poly(hexamethylene adipate), poly(ethylene succinate), poly(butylene glutarate), poly(butylene adipate), poly(ethylene glutarate), poly(ethylene adipate), poly(diethylene glutarate), poly(diethylene adipate), poly(diethylene succinate) or poly(hexamethylene succinate), preferably PBSA.

The polymer composition may also optionally be mixed with conventional plastic raw materials, such as polyethylene or polypropylene. This way a composition suitable for manufacturing packaging material having certain advantageous characteristics may be obtained. The choice of raw material blend depends on the requirements and end use of the material.

According to one embodiment, the new homogenous polymer mixture comprising the composition according to the invention contains essentially only raw materials derived from renewable sources. The new composition may even consist entirely of raw materials from renewable sources. According to one embodiment, the new composition consists entirely of biodegradable raw materials derived from renewable sources.

The homogenous polymer mixture comprising the composition according to the invention can be made suitable for blow film processing, cast film processing, or injection molding. Other methods that may be suitable for processing the polymer composition of the invention are for example; calendaring, extrusion blow molding, film extrusion, injection blow molding, gas assisted injection molding, injection stretch blow molding, laminating, rotational molding, deep-drawing applications, 3D-printing, thermoforming and/or vacuum forming.

In tests performed in connection with the present invention, the inventors discovered that the homogenous polymer mixture comprising the polymer composition of the present invention and the materials manufactured therefrom have excellent heat resistance. To get good results, relatively high temperatures are required. For example, the peak melting points of for the used polymers are around 190°C for CAP and 115°C for PBS, but the processing temperatures need to be higher. Preferably, the processing temperatures for all processes (compounding, film blowing, injection molding, extrusion coating, thermoforming) are clearly higher than the melting temperatures of the polymers. All components must be completely in the molten phase for the processing to be successful. It is of high importance that the processing temperatures at each step of the production of the compositions of the invention and the (packaging) materials manufactured therefrom is at least or above 210 °C. By using temperatures of at least 210°C, the high-quality homogenous polymer mixture material, which is suitable for various packaging material applications, with the high tensile strength and rigidity, as well as excellent transparency and clarity can be obtained.

It was surprisingly discovered that the material can withstand temperatures of up to 500°C. This enables use of the polymer composition of the invention and materials manufactured therefrom in for example deep-drawing applications or for certain seaming applications. This was surprising, since CAP and PBS alone start degrading at lower temperatures.

According to one embodiment, the homogenous polymer mixture comprising a polymer composition of the invention is obtained by melt-mixing said cellulose ester polymer and said at least one other polymer at a temperature of at least 210°C

Typically, the temperature is between 210°C and 300°C. Preferably the temperature is between 210°C and 270°C or 210°C and 250°C, more preferably between 210°C and 235°C. For example, the temperature can be 215°C or 220°C. According to one specific preferred embodiment, the temperature is 210°C to 230°C, preferably 210 to 225°C. The temperature of at least 210°C and according to the mentioned embodiments enables to obtain a substantially homogenous, substantially clear and substantially transparent polymer mixture.

According to one embodiment, the homogenous polymer mixture comprising a polymer composition of the invention is obtained by processing, preferably melt-mixing, said cellulose ester polymer and said at least one other polymer at a temperature of at least 210°C, preferably between 210°C and 300°C or 210°C to 270°C, more preferably between 210°C and 225°C, for a time period of at least 30 sec., preferably 1 min to 5h, more preferably 1.5 min to 2h, most preferably 2 min to 1h. Typically, the time period for the processing step, such as melt-mixing, is at least 2 min, such as 2 min to 15 min or 2 min to 10 min. In tests performed in connection with the present invention it was surprisingly discovered that a rather short time period, such as less than 30sec. or 30 sec to 2 min, is needed to obtain the homogenous polymer mixture, if the temperature of the processing is above 200°C, or preferably at least 210°C. The exact required time period depends on the used equipment in the mixing step, and the mixing speed and other parameters of the mixing step.

According to one embodiment, the polymer composition of the invention comprises silica (SiO₂) in an amount of 0.5 weight-% or less, preferably in an amount of 0.1 weight-% or less. By adding silica powder to the composition, the processability can be improved. Thereby, the result is improved homogeneity and more uniform quality of the materials manufactured from the composition according to the invention.

The present invention further concerns a method for manufacturing a packaging material. The method comprises the following steps:
a. melt mixing, at a temperature of at least 200°C, a polymer composition comprising at least one cellulose ester polymer, which is cellulose acetate propionate (CAP), and at least one other polymer selected from the group consisting of polybutylene succinate (PBS) and polypropylene succinate (PPS), wherein the total amount of said cellulose ester polymer and said at least one other polymer is at least 80 wt.% based on the total weight of the polymer composition, to obtain a homogenous polymer mixture,
b. optionally granulating the homogenous mixture to obtain a granulated polymer mixture, and
c. producing a packaging material from said homogenous polymer mixture and/or said granulated polymer mixture.

According to one embodiment, the homogenous polymer mixture obtained in step a. is the homogenous polymer mixture comprising a polymer composition according to the invention as described herein.

According to one embodiment, the method comprises producing a packaging material using a process selected from the group consisting of; blow film processing, cast film processing, injection molding, calendaring, extrusion blow molding, film extrusion, injection blow molding, gas assisted injection molding, injection stretch blow molding, laminating, rotational molding, deep-drawing application, 3D-printing, thermoforming, and vacuum forming, preferably blow film processing, cast film processing, or injection molding.

According to one embodiment, the method according to the invention comprises that melt-mixing is performed at a temperature of at least 200°C, preferably between 200°C and 300°C or more preferably 210°C to 250°C, even more preferably between 210°C and 225°C.

According to one embodiment, the method according to the invention comprises that producing a packaging material from said homogenous polymer mixture and/or said granulated polymer mixture is performed at a temperature of at least 200°C.

According to one embodiment, the melt-mixing is performed at a time period of at least 10 sec., preferably at least 30 sec., more preferably 1 min to 5h, for example 2 min to 1h. Typically, the time period of the melt-mixing step is between 2 min and 1h, preferably 2 min to 0.5h. In some cases, it may even be about 30 sec. or less, since very efficient mixing of the components of the mixture according to the invention is obtainable. This is beneficial, since it reduces the production time and energy needed.

According to one embodiment, the processing temperature for a film blowing process for producing a film of the homogenous polymer mixture comprising a polymer composition according to the invention is between 200°C and 250°C, preferably between 210°C and 230°C, more preferably between 215 and 220°C. This temperature range ensures obtaining a clear and transparent film with good quality and excellent mechanical properties.

The melt mixing may be done in a continuous compounding process. The melt mixing is for example carried out with a two-screw compounder equipped with melt pump unit and connected directly suitable extrusion die. Thus, the compound can directly be extruded into final product without separate granulation of the polymer composition. The commercially available starting materials for he polymer composition of the invention are typically granulated themselves. The granulates can for example be mechanically mixed in a drum mixer or the like. This mixture of granulates can be fed to an extruder, e.g. a screw extruder equipped with a maddock mixer head. After that, the polymer melt can be extruded to e.g. a blow film die. The polymer composition according to the invention can thus be formed into for example plastic films using a film blowing process without a separate compounding and granulation step. This was shown in tests performed in accordance with the present invention (examples). It was surprising that the raw materials mix so well that a separate compounding/ granulating step is not necessary.

When melt mixing is performed as a separate phase to produce granulates of the polymer composition, the output from the compounder (strand, filament, or any other continuously flowing shape) is to be cooled and cut in granulates. The cooling of the output cane be suitably be done by dry cooling with air or cooled belt/band. Additionally or alternatively, the output from the compounding can be cooled by passing it through water bath or by using underwater cutting, or any similar cooling system, which allows direct contact of the polymeric material with water. According to tests performed in connection with the present invention, the water cooling does not cause hydrolysis of components in the polymer composition of the invention. Thus, dry cooling and water cooling are both suitable for the process of the invention. Accordingly, in one embodiment of the invention, the method comprises a compounding and granulation step of the cellulose ester polymer and the at least one other polymer, including dry cooling and/or water cooling.

The melt mixing may also be performed in a batch mixer or any mixer suitable for polymer melts. The mixer does not have to produce continuous material flux.

Optionally the method may comprise premixing or impregnation steps for some of the components of the mixture to be formed in step a.

Standard tests known to the person skilled in the art can be made to ensure that the obtained mixture of step a. is suitable for blow film processing, cast film processing, injection molding or other processes. The composition of the present invention needs to fulfil these requirements.

The composition according to the invention can be processed in conventional apparatuses for forming plastic films, foils, articles or other materials.

The properties of the film or foil, article or packaging material manufactured from the composition according to the invention, such as thickness, density, etc., need to be adjusted so that they are suitable for their intended use or application.

Furthermore, standard tests exist to ensure that e.g. a plastic wrap or packaging material is effective. Some of the important are tests are for example permeability (water vapor and gas), impact resistance, water absorption, and tear strength. The formed packaging film or foil needs to fulfil certain specific requirements depending on the intended applications, such as use for packaging food.

The present invention also concerns use of the polymer composition according to the invention for the manufacture of a packaging material.

According to test performed in connection with the present invention, the produced films had excellent transparency. As can be seen in Fig. 1, all films produced from the material according to the invention had good transmittance, also compared to PP. In addition to being transparent, the materials produced from the composition according to the invention were colorless. A transparent and uncolored packing material is beneficial in packing materials especially when packing consumer goods, because it makes the product more attractive to the consumer.

There are several problems associated with many of the commonly used bioplastic materials. Some bioplastic materials are for example not at all transparent. Another problem is that the mechanical properties of many bioplastic materials are not as good as e.g. PE, PP or PET, which makes it difficult to replace these materials with bioplastics. Yet another problem is that some bioplastic materials are not easily recyclable, for example recycling polylactic acid (PLA) is expensive and difficult. The composition according to the present invention is, however, recyclable by more conventional methods. The material may be melted and processed into new material. It is also possible to separate the material from e.g. polyolefins by selective extraction. The presented material is denser than water and most of the widely used polyolefin grades. This enables density-based separation.

An important advantage with the homogenous polymer mixture according to the invention, is that the packaging materials manufactured therefrom can be produced using existing manufacturing processes and technology. Thus, it is an economically feasible alternative, since no major investments need to be made in new manufacturing equipment. Further, the raw materials are commercially available from several manufacturers.

Further advantages related to the packaging material manufactured from the homogenous polymer mixture comprising a polymer composition according to the invention are that plastic waste is reduced, since the composition may be degradable. Furthermore, use of fossil raw material can be reduced, since the composition according to the invention can be made mainly of renewable resources. Also, since part of the composition according to the invention may be derived from wood, production does not occupy arable land.

The invention is further illustrated by the following examples.

### EXAMPLES

The following raw materials which have been used in the Examples are presented in Table 1 below:

**Table 1. Molar mass SEC measurements of used raw materials CAP and PBS.**

| Entry | Compound | Mn g/mol | Mw g/mol | PD | Eluent/ HPSEC system |
|---|---|---|---|---|---|
| 1 | CAP 1 flakes, no additives | 91,000 | 235,000 | 2.6 | Chloroform |
| 2 | CAP 2 granulate with stabilizers | 90,000 | 221,000 | 2.5 | Chloroform |
| 3 | PBS 1 granulate | 69,000 | 180,000 | 2.6 | Chloroform |
| 4 | PBS 2 granulate, biobased | 76,000 | 215,000 | 2.8 | Chloroform |

In Table 1, CAP is cellulose acetate propionate and PBS is polybutylene succinate.

The number average molar mass measurements (Mn) were performed with size exclusion chromatography (SEC) using chloroform eluent for the number average molar mass measurements, the samples (Entries 1 to 4), were dissolved overnight using chloroform (concentration of 1 mg/ml). Samples were filtered (0.45 µm) before the measurement.

The SEC measurements were performed in chloroform eluent (0.6 ml/min, T=30 °C) using Styragel HR 4 and 3 columns with a pre-column. The elution curves were detected using Waters 2414 Refractive index detector. The molar mass distributions (MMD) were calculated against 10 x PS (580 - 3,040,000 g/mol) standards, using Waters Empower 3 software.

Degree of substitution of CAP 1:
- acetyl content 1.3 wt-%
- propionyl content 48 wt
- hydroxyl content 1.7 wt.%

Degree of substitution of CAP 2:
- acetyl content 1.3 wt-%
- propionyl content 48 wt
- hydroxyl content 1.7 wt.%

### Example 1: Compositions for film blowing process with CAP 1 and PBS 1

Homogenous mixtures of the polymer composition according to the invention were formed into plastic films using a film blowing process. Homogenous polymer mixtures were obtained by melt mixing. The mixing was conducted at a temperature of 210°C for a time period of 30 seconds to 3.5 min.

Details regarding the compositions and films can be seen in Table 2.

**Table 2. Films manufactured from the polymer composition according to the invention.**

| Film No. | weight-% CAP 1 | weight-% PBS 1 | Processing tem peratu re for melt mixing (°C) |
|---|---|---|---|
| 1 | 60 | 40 | 210 |
| 2 | 65 | 35 | 210 |
| 3 | 70 | 30 | 210 |
| 4 | 75 | 25 | 210 |

In Table 2, CAP is cellulose acetate propionate and PBS is polybutylene succinate. The polymer compositions also comprised 0.1 weight-% silica.

The compositions in Table 2 gave colorless, clear, transparent films with good mechanical properties, especially high tensile strength and modulus. The mechanical properties of the produced films 1-4 are described in the Table 3.

**Table 3. Mechanical properties of the produced films.**

| Film No. | wt.-% CAP 1 | wt.-% PBS 1 | Tensile stress at max. load (MPa) | Tensile strain at max. load (%) | Tensile stress at break (MPa) | Tensile strain at break (%) | Tensile stress at yield (MPa) | Modulus (automatic) (MPa) | thickness (µm) |
|---|---|---|---|---|---|---|---|---|---|
| 1 | 60 | 40 | 21.7 | 51.6 | 20.6 | 53.0 | 20.5 | 95 | 31 |
| 2 | 65 | 35 | 30.1 | 46.6 | 25.1 | 48.1 | 19.7 | 873 | 36 |
| 3 | 70 | 30 | 39.7 | 33.7 | 36.3 | 34.4 | 31.9 | 1511 | 37 |
| 4 | 75 | 25 | 47.5 | 22.3 | 39.4 | 24.5 | 43.3 | 2059 | 36 |

In Table 3, CAP is cellulose acetate propionate and PBS is polybutylene succinate.

### Example 2: Compositions for film blowing process with CAP 1, PBS 1 and TEC

The homogenous polymer mixture comprising a polymer composition according to the invention was formed into plastic films using a film blowing process. Homogenous polymer mixtures were obtained by melt mixing. The mixing was conducted at a temperature of 210°C for a time period of 2 min to 3.5 min.

Details regarding the compositions and films can be seen in Table 4.

**Table 4. Films manufactured from the polymer composition according to the invention.**

| Film No. | weight-% CAP 1 | weight-% PBS 1 | weight-% TEC | Processing tem peratu re for melt mixing (°C) |
|---|---|---|---|---|
| 5 | 56.6 | 37.7 | 5.7 | 210 |
| 6 | 57.1 | 38.1 | 4.8 | 210 |

In Table 4, CAP is cellulose acetate propionate, PBS is polybutylene succinate and TEC is triethyl citrate.

The compositions in Tables 2 and 4 gave good-quality clear, transparent films, which were suitable for manufacturing a packaging material.

A comparison of the transparency of the produced films can be seen in Figure 1, where the numbers 1 to 5 represent the films 1 to 5 as described above. As can be seen from the Figure, all films have very high transparency, which is indicated by the transmittance % and is above 80 % for all films produced by the material according to the invention. As a reference example, a PP film (polypropylene film) has been used. The PP film had clearly lower transparency than all films according to the invention at wavelengths above 250 nm. The thickness of the films at the point of measurement for films 1 to 4 was about 30 µm, for film 5 about 100 µm and for PP about 55 µm.

### Example 3: Film blowing process with CAP 2 and PBS 2

The homogenous polymer mixture comprising a polymer composition according to the invention was formed into plastic films using a film blowing process. In the first step, CAP 2 and PBS 2 were mixed with a two screw compounder/extruder in order to form homogeneous blends. The mixing was conducted at a temperature of 210°C. In case of film 7, the strand from the compounder was cooled down on a Teflon belt without presence of water prior cutting of granulates. In case of film 8, the strand from the compounder was cooled down in a water bath prior cutting of granulates. In the second step, both films 7 and 8 were blown similarly as the films 1 - 6.

The processing temperature for the film blowing process was between 210 and 230°C. It was concluded that the temperature is of high importance for obtaining a clear and transparent film with good quality and mechanical properties.

Details regarding the compositions and films can be seen in Table 5.

**Table 5. Films manufactured from the polymer composition according to the invention.**

| Film No. | weight-% CAP 2 | weight-% PBS 2 | Processing temperature for melt mixing (°C) | cooling of compounded blend prior granulation |
|---|---|---|---|---|
| 7 | 70 | 30 | 210 | dry cooling |
| 8 | 70 | 30 | 210 | water cooling |

In Table 5, CAP is cellulose acetate propionate and PBS is polybutylene succinate.

With films 7 and 8 both compositions gave clear and transparent film products.

### Example 4: Film blowing process with CAP 2 and PBS 2 without separate compounding and granulation steps

The homogenous polymer mixture comprising a polymer composition according to the invention was formed into plastic films using a film blowing process without separate compounding and granulation steps. The granulated starting materials 70 weight-% of CAP 2 and 30 weight-% of PBS 2 were mechanically mixed in a drum mixer at room temperature for two minutes. This mixture of granulates was fed into one screw extruder equipped with a maddock mixer head. The polymer melt was extruded through a melt filter pack (50 mesh) to the blow film die. A transparent film material was obtained which was suitable for use as a packaging material.

### Example 5: Compositions for injection molding

The homogenous polymer mixture comprising a polymer composition according to the invention was formed into solid molded objects using an injection molding process. A compounded and granulated polymer composition was melted and injected at temperature of 210 °C to 230°C into a mold with a temperature of 30 °C. The injection molded composition comprised of 70 % of CAP 2 and 30 % of PBS 2.

Injection molding of the material resulted in clear, transparent and rigid test bars. The mechanical properties of the injection molded material are presented in Table 6.

**Table 6. Mechanical properties of the injection molded tensile test bar.**

| wt.-% CAP 2 | wt.-% PBS 2 | Tensile stress at max. load (MPa) | Tensile strain at max. load (%) | Tensile stress at break (MPa) | Tensile strain at break (%) | Tensile stress at yield (MPa) | Modulus (automatic) (MPa) |
|---|---|---|---|---|---|---|---|
| 70 | 30 | 26.7 | 36.7 | 24.1 | 39.8 | 25.0 | 1395 |

In Table 6, CAP is cellulose acetate propionate and PBS is polybutylene succinate.

The tests showed that the polymer mixture of the invention can be recycled in the injection molding process. Any waste forming in the process can be ground to small pieces and fed back to the feeding funnel of the process. Over 20% of recycled material can be used with no loss of mechanical and optical properties in the final products.

### Example 6: Recycling of the material

The recyclability of material manufactured from the composition according to the invention was investigated and verified by repeating multiple thermal mixing cycles and measuring change of molar mass for the polymer blend. The results presented in Table 7 showed that after certain mixing time representing at least 10 recycling cycles, there was no noticeable changes in the polymer chain lengths.

Thus, the polymer composition according to the invention is recyclable by thermomechanical processing methods.

**Table 7. Number average molar mass SEC measurements of used CAP and PBS.**

| Entry | Granulate with 70 wt% CAP 2 and 30 wt% PBS 2 | Mn g/mol | Mw g/mol | PD | Eluent/ HPSEC system |
|---|---|---|---|---|---|
| 1 | 0 min thermoplastic mixing | 61, 000 | 196,000 | 3.2 | Chloroform |
| 2 | 5 min thermoplastic mixing | 59,000 | 193,000 | 3.3 | Chloroform |
| 3 | 10 min thermoplastic mixing | 62,000 | 194,000 | 3.1 | Chloroform |
| 4 | 15 min thermoplastic mixing | 59,000 | 192,000 | 3.2 | Chloroform |
| 5 | 60 min thermoplastic mixing | 62,000 | 215,000 | 3.5 | Chloroform |

In Table 7, CAP is cellulose acetate propionate and PBS is polybutylene succinate.

The number average molar mass measurements were performed with size exclusion chromatography (SEC) using chloroform eluent for the number average molar mass measurements, the samples (Entries 1 to 5), were dissolved overnight using chloroform (concentration of 1 mg/ml). Samples were filtered (0.45 µm) before the measurement.

The SEC measurements were performed in chloroform eluent (0.6 ml/min, T=30 °C) using Styragel HR 4 and 3 columns with a pre-column. The elution curves were detected using Waters 2414 Refractive index detector. The molar mass distributions (MMD) were calculated against 10 x PS (580 - 3040000 g/mol) standards, using Waters Empower 3 software.

### Example 7: Compounding in industrial scale

Compounding was done in tonne scale in an industrial process, the following parameters were used for producing the homogeneous polymer mixture: melt pump temperature 225 °C, screw speed 560-620 rpm and heating zones set temperatures between 210-235 °C (11 heating zones). The mixture produced with this method comprised of 70% CAP 2 and 30% of PBS 2.

### Example 8: Extrusion coating of paper substrate

A homogenous polymer mixture comprising a polymer composition according to the invention obtained according to Example 7 was used for extrusion coating of paper.

A compounded and granulated homogenous polymer mixture was melted and extruded on a paper substrate. The processing temperatures varied from 225-250°C for clear and even coatings. The composition of the invention used for extrusion coating comprised of 70 % of CAP 2 and 30 % of PBS 2.

It was discovered, that the adhesion of this coating could be tuned with process temperatures and additional polymer and glue layers. With certain processing parameters the polymer coating could be peeled off from the paper substrate and used for a peel-off application. This can facilitate the recycling of the coated paper as well as the coating itself. With certain process parameters or addition of extruded polymer or glue layers the adhesion can be tuned stronger for applications where strong adhesion is required.

Tests performed with the obtained coated product showed that the polymer coating was heat sealable, printable and had good barrier properties.

### Example 9: Production of a thermoformed cup from film

1) A laminated blown film of 40 µm thickness comprising a homogenous polymer mixture comprising a polymer composition according to the invention obtained according to Example 7 was used for deep-drawing. The thermoforming was done at 200°C. The product was a transparent cup (1) with excellent clarity and good puncture resistance. The composition of the invention used for the thermoforming comprised of 70 % of CAP 2 and 30 % of PBS 2.
   Properties of the thermoformed cup (1):
   - Excellent transparency and clarity
   - Puncture resistance (EN 14477) 6.11 N
2) A laminated blown film of 170 µm thickness comprising a homogenous polymer mixture comprising a polymer composition according to the invention obtained according to Example 7 was used for deep-drawing. The thermoforming was done at 200°C. The product was a transparent cup (2) with excellent clarity and good puncture resistance. The composition of the invention used for the thermoforming comprised of 70 % of CAP 2 and 30 % of PBS 2.
Properties of the thermoformed cup (2):
- Excellent transparency and clarity
- Puncture resistance (EN 14477) 19.6 N

### Example 10: Cast film extrusion

A homogeneous polymer mixture comprising a polymer composition according to the invention was used for cast film extrusion. A compounded and granulated homogeneous polymer mixture was melted and extruded as cast film. The processing temperatures varied from 200 - 225 °C for clear films. The compositions of the invention used for cast film extrusion are listed in Table 8 (films 9-14).

**Table 8. Tests with cast film extrusion**

| Film No. | weight-% CAP 2 | weight-% PBS 2 | Processing temperature for cast film extrusion (°C) | Film thickness (µm) |
|---|---|---|---|---|
| 9 | 70 | 30 | 215 | 300 |
| 10 | 75 | 25 | 215 | 300 |
| 11 | 80 | 20 | 215 | 300 |
| 12 | 85 | 15 | 215 | 300 |
| 13 | 90 | 10 | 215 | 300 |
| 14 | 95 | 5 | 225 | 300 |

All films 9 - 14 were tested in deep-drawing applications. The results showed that all films were suitable for deep-drawing. It was noted that films 9 - 12 formed products of especially high quality.

### Example 11: Cast film with additives

A homogeneous polymer mixture comprising a polymer composition according to the invention was used for cast film extrusion and different additives were added to the polymer mixture. A compounded and granulated homogeneous polymer mixture was melted and extruded as cast film. The processing temperatures varied from 210 - 225 °C for clear films. The compositions of the invention used for cast film extrusion are listed in Table 9 (films 18-23).

**Table 9. Tests with cast film extrusion and additives.**

| Film No. | weight-% CAP 2 | PBS 2 weight-% | Additive (weight-%) | Processing tem peratu re for cast film extrusion (°C) | Film thickness (µm) |
|---|---|---|---|---|---|
| 18 | 72.5 | 26.5 | A1 (1%) | 215 | 300 |
| 19 | 72.5 | 24.5 | A1 (3%) | 215 | 300 |
| 20 | 72.5 | 25.5 | A1 (1%), A2 (1%) | 215 | 300 |
| 21 | 72.5 | 21.5 | A1 (3%), A2 (3%) | 215 | 300 |
| 22 | 72.5 | 25.5 | A3 (2%) | 215 | 300 |
| 23 | 72.5 | 23.5 | A3 (4%) | 215 | 300 |

The additives used were A1 (SUKANO PBS dc S724), A2 (SUKANO PBS ao S723), A3 (SUKANO PLA uv S547). All presented weight-% values are based on the total weight of the composition.

### Example 12: Multilayer cast film

A homogeneous polymer mixture comprising a polymer composition according to the invention was used for multilayer cast film extrusion with EVOH (ethylene vinyl alcohol copolymer). A compounded and granulated homogeneous polymer mixture was melted and extruded as a multilayer cast film. The processing temperatures varied from 210 - 225 °C for clear multilayer film products. The compositions of the invention used for multilayer film production was 72.5% of CAP 2 and 27.5% of PBS 2. Film structure ABA with A being homogeneous polymer mixture of CAP 2 (72.5%) and PBS 2 (27.5%) and B being EVOH polymer granulate.

The EVOH used was Soarnol DC3203RB.

## Claims

1. A homogenous polymer mixture comprising a polymer composition, **characterized in that** said composition comprises at least one cellulose ester polymer, which is cellulose acetate propionate (CAP), in an amount of 55 to 95 weight-% and at least one other polymer, which is selected from the group consisting of polybutylene succinate (PBS) and polypropylene succinate (PPS), in an amount of 5 to 40 weight-%, wherein the total amount of said cellulose ester polymer and said at least one other polymer is at least 80 weight-% based on the total weight of the polymer composition, obtained by processing said polymer composition at a temperature of at least 210°C.

2. The homogenous polymer mixture according to claim 1, **characterized in that** the total amount of said cellulose ester polymer and said at least one other polymer it at least 85 wt.%, preferably at least 90 wt.%, more preferably at least 95 wt.%, based on the total weight of the polymer composition the rest being other polymers and/or additives such as softeners, pigments, stabilizers or other additives for use in plastic compositions.

3. The homogenous polymer mixture according to any one of the preceding claims, **characterized in that** said polymer composition comprises at least one softener, preferably triethyl citrate (TEC).

4. The homogenous polymer mixture according to any one of the preceding claims, **characterized in that** said at least one other polymer is polybutylene succinate (PBS).

5. The homogenous polymer mixture according to claim 4, **characterized in that** said PBS has a molar mass (Mn) in the range of 30,000 to 100,000 Da; preferably 50,000 to 80,000 Da; more preferably 60,000 to 70,000 Da, measured with size exclusion chromatography (SEC) in chloroform eluent (0.6 ml/min, T=30 °C) using Styragel HR 4 and 3 columns with a pre-column, detecting elution curves using Waters 2414 Refractive index detector, and calculating molar mass distributions (MMD) against 10 x PS (580 - 3040000 g/mol) standards, using Waters Empower 3 software.

6. The homogenous polymer mixture according to any one of the preceding claims, **characterized in that** said polymer composition comprises cellulose acetate propionate (CAP) in an amount of 55 to 80 weight-%, preferably 60 to 75 weight-%, more preferably 65 to 75 weight-%, and at least one other polymer selected from the group consisting of polybutylene succinate (PBS) and polypropylene succinate (PPS) in an amount of 20 to 40 weight-%, preferably 25 to 35 weight-%, based on the total weight of the composition, and optionally at least one additive such as softeners, pigments, stabilizers or other additives for use in plastic compositions.

7. The homogenous polymer mixture according to any one of the preceding claims, **characterized in that** said polymer composition comprises cellulose acetate propionate in an amount of 55 to 80 weight-%, preferably 60 to 75 weight-%, more preferably 65 to 75 weight-%, and polybutylene succinate in an amount of 20 to 40 weight-%, preferably 25 to 40 weight-%, more preferably, 25 to 35 weight-%, based on the total weight of the composition, and optionally at least one additive such as softeners, pigments, stabilizers or other additives for use in plastic compositions.

8. The homogenous polymer mixture according to any one of the preceding claims, **characterized in that** the cellulose ester has a number average molar mass of 30,000 to 110,000 Da; preferably 50,000 to 100,000 Da; more preferably 65,000 to 95,000 Da, measured with size exclusion chromatography (SEC) in chloroform eluent (0.6 ml/min, T=30 °C) using Styragel HR 4 and 3 columns with a pre-column, detecting elution curves using Waters 2414 Refractive index detector, and calculating molar mass distributions (MMD) against 10 x PS (580 - 3040000 g/mol) standards, using Waters Empower 3 software.

9. The homogenous polymer mixture according to any one of the preceding claims, **characterized in that** the cellulose ester has an acetyl content of 0.8 to 2.0 wt.%, more preferably 1.0 to 1.5 wt.%, and/or a propionyl content of 30 to 51 wt.%, more preferably 40 to 50 wt.%, and/or a hydroxyl content of 1.0 to 2.5 wt.%, more preferably 1.5 to 2.0 wt.%.

10. The homogenous polymer mixture according to any one of the preceding claims, **characterized in that** the homogenous polymer mixture is obtained by processing by melt-mixing said cellulose ester polymer and said at least one other polymer at a temperature between 210°C and 300°C, preferably between 210°C and 270°C, more preferably between 210°C and 250°C, even more preferably between 210°C and 225°C.

11. The homogenous polymer mixture according to any one of the preceding claims, **characterized in that** the polymer composition comprises silica (SiO₂) in an amount of 0.5 weight-% or less, preferably in an amount of 0.1 weight-% or less.

12. The homogenous polymer mixture according to any one of the preceding claims, **characterized in that** the homogenous polymer mixture comprising a polymer composition according to the invention comprises another component, which is selected from the group consisting of a cellulose ester, such as cellulose acetate or cellulose acetate butyrate (CAB), an aliphatic or aliphatic aromatic polyester, such as polybutylene succinate adipate (PBSA) or polybutylene adipate terephthalate (PBAT), a polyhydroxyalkanoate (PHA), such as polyhydroxybutyrate (PHB), polylactic acid (PLA), and polycaprolactone (PCL).

13. A substantially clear and transparent material, **characterized in that** it comprises the homogenous polymer mixture comprising a polymer composition according to any one of the claims 1 to 12.

14. A packaging material, **characterized in that** it comprises the homogenous polymer mixture comprising a polymer composition according to any one of the claims 1 to 12.

15. The packaging material according to claim 14, **characterized in that** it is paper or cardboard material extrusion coated with the homogenous mixture comprising a polymer composition according to any one of the claims 1 to 12.

16. The packaging material according to claim 14, **characterized in that** it is an injection molded product.

17. The packaging material according to claim 14, **characterized in that** it is a product produced by a deep-drawing application.

18. The packaging material according to claim 14, **characterized in that** it is a product produced by blow film processing.

19. A method for manufacturing a packaging material, **characterized in that** the method comprises the following steps:
a. melt mixing, at a temperature of at least 210°C, a polymer composition comprising at least one cellulose ester polymer, which is cellulose acetate propionate (CAP), in an amount of 55 to 95 weight-% and at least one other polymer selected from the group consisting of polybutylene succinate (PBS) and polypropylene succinate (PPS), in an amount of 5 to 40 weight-%, wherein the total amount of said cellulose ester polymer and said at least one other polymer is at least 80 wt.% based on the total weight of the polymer composition, to obtain a homogenous polymer mixture,
b. optionally granulating the homogenous mixture to obtain a granulated polymer mixture, and
c. producing a packaging material from said homogenous polymer mixture and/or said granulated polymer mixture.

20. The method according to claim 19, **characterized in that** the polymer composition in step a. is the polymer composition as defined in any one of the claims 1 to 12.

21. The method according to claim 19 or 20, **characterized in that** the melt-mixing is performed at a temperature between 210°C and 300°C, preferably between 210°C and 270°C, more preferably between 210°C and 250°C, even more preferably between 210°C and 225°C.

22. The method according to claim 19, 20 or 21, **characterized in that** the melt-mixing is performed at a time period of, at least 10 sec., preferably at least 30 sec., more preferably 1 min to 5h, for example 2 min to 1h.

23. The method according to any one of the claims 19 to 22, **characterized in that** producing a packaging material from said homogenous polymer mixture and/or said granulated polymer mixture is performed at a temperature of at least 200°C, preferably at least 210°C, and more preferably between 210°C and 500°C.

24. The method according to any one of the claims 19 to 23, **characterized in that** producing a packaging material from said homogenous polymer mixture and/or said granulated polymer mixture is performed by extrusion coating a paper or cardboard material with the homogenous mixture comprising a polymer composition according to any one of the claims 1 to 12, wherein the extrusion coating is performed at a temperature of 200°C to 300°C, preferably 210°C to 260°C, most preferably 225°C to 250°C.

25. The method according to claim 24, **characterized in that** said homogenous polymer mixture comprises a polymer composition comprising cellulose ester polymer in an amount of 60 to 90 weight-%, more preferably 60 to 75 weight-%, and at least one other polymer in an amount of 10 to 40 weight-%, more preferably 25 to 40 weight-% based on the total weight of the polymer composition, and optionally additives.

26. The method according to any one of the claims 19 to 23, **characterized in that** producing a packaging material from said homogenous polymer mixture and/or said granulated polymer mixture is performed by injection molding, wherein the injection molding is performed at a temperature of 200°C to 300°C, preferably 200°C to 250°C, most preferably 210°C to 230°C.

27. The method according to claim 26, **characterized in that** said homogenous polymer mixture comprises a polymer composition comprising cellulose ester polymer in an amount of 60 to 95 weight-%, more preferably 65 to 90 weight-%, and at least one other polymer in an amount of 5 to 40 weight-%, more preferably 10 to 35 weight-% based on the total weight of the polymer composition.

28. The method according to any one of the claims 19 to 23, **characterized in that** producing a packaging material from said homogenous polymer mixture and/or said granulated polymer mixture is performed by a deep-drawing application, wherein the deep-drawing application is performed at a temperature of 200°C to 500°C.

29. The method according to claim 28, **characterized in that** said homogenous polymer mixture comprises a polymer composition comprising cellulose ester polymer in an amount of 50 to 95 weight-%, more preferably 60 to 85 weight-%, and at least one other polymer in an amount of 5 to 50 weight-%, more preferably 15 to 40 weight-% based on the total weight of the polymer composition, and optionally additives.

30. The method according to any one of the claims 19 to 23, **characterized in that** producing a packaging material from said homogenous polymer mixture and/or said granulated polymer mixture is performed by blow film processing, wherein the blow film processing is performed at a temperature of 200°C and 250°C, preferably between 210°C and 230°C.

31. The method according to claim 30, **characterized in that** said homogenous polymer mixture comprises a polymer composition comprising cellulose ester polymer in an amount of 60 to 90 weight-%, more preferably 60 to 75 weight-%, and at least one other polymer in an amount of 10 to 40 weight-%, more preferably 25 to 40 weight-% based on the total weight of the polymer composition, and optionally additives.

32. The method according to any one of the claims 19 to 23, **characterized in that** producing a packaging material from said homogenous polymer mixture and/or said granulated polymer mixture is performed by cast film processing, wherein the cast film processing is performed at a temperature of 200°C and 250°C, preferably between 200°C and 230°C, more preferably between 210 and 225°C.

33. The method according to claim 32, **characterized in that** said homogenous polymer mixture comprises a polymer composition comprising cellulose ester polymer in an amount of 60 to 95 weight-%, more preferably 70 to 95 weight-%, and at least one other polymer in an amount of 5 to 40 weight-%, more preferably 5 to 30 weight-% based on the total weight of the polymer composition, and optionally additives.

34. The method according to any one of the claims 19 to 23, **characterized in that** the method comprises producing a packaging material using a process selected from the group consisting of; blow film processing, cast film processing, injection molding, calendaring, extrusion blow molding, film extrusion, injection blow molding, gas assisted injection molding, injection stretch blow molding, laminating, rotational molding, deep-drawing application, 3D-printing, thermoforming and vacuum forming, preferably blow film processing, cast film processing, or injection molding, preferably injection molding, extrusion blow molding, blow film processing, film extrusion, or a deep-drawing application.

35. A packaging material according to claims 14-18 obtained by the process according to any one of the claims 19 - 34.

36. Use of the homogenous mixture comprising a polymer composition according to any one of the claims 1 to 12 for the manufacture of a packaging material, selected from for example cling film, shrink film, stretch film, bag film or container liners, films meant for consumer packaging (e.g. packaging film for frozen products, shrink film for transport packaging, food wrap film, packaging bags, or form, fill and seal packaging film), laminating film (e.g. laminating of aluminum or paper used for packaging for example milk or coffee), barrier film (e.g. film acting as an aroma or oxygen barrier used for packaging food, e.g. cold meats and cheese), films for the packaging of medical products, agricultural film (e.g. greenhouse film, crop forcing film, silage film, silage stretch film), extrusion coating applications, bag, box, container, casing, housing or molded 3D-objects, and/or other applications in packaging goods, such as food, medical products or cosmetics.

## Patentansprüche

1. Homogene Polymermischung, die eine Polymerzusammensetzung umfasst, **dadurch gekennzeichnet, dass** die Zusammensetzung wenigstens ein Zelluloseesterpolymer, welches Zelluloseacetatpropionat (CAP) ist, in einer Menge von 55 bis 95 Gewichts-% und wenigstens ein anderes Polymer, welches ausgewählt ist aus der Gruppe bestehend aus Polybutylensuccinat (PBS) und Polypropylensuccinat (PPS), in einer Menge von 5 bis 40 Gewichts-% umfasst, wobei die Gesamtmenge des Zelluloseesterpolymers und des wenigstens einen anderen Polymers wenigstens 80 Gewichts-% basierend auf dem Gesamtgewicht der Polymerzusammensetzung ist, erhalten durch Verarbeiten der Polymerzusammensetzung bei einer Temperatur von wenigstens 210° C.

2. Homogene Polymermischung nach Anspruch 1, **dadurch gekennzeichnet, dass** die Gesamtmenge des Zelluloseesterpolymers und des wenigstens einen anderen Polymers wenigstens 85 Gewichts-%, vorzugsweise wenigstens 90 Gewichts-%, weiter bevorzugt wenigstens 95 Gewichts-%, basierend auf dem Gesamtgewicht der Polymerzusammensetzung ist, wobei der Rest andere Polymere und/oder Additive sind wie zum Beispiel Weichmacher, Pigmente, Stabilisatoren oder andere Additive zur Verwendung in Kunststoffzusammensetzungen.

3. Homogene Polymermischung nach einem der vorhergehenden Ansprüche, **dadurch gekennzeichnet, dass** die Polymerzusammensetzung wenigstens einen Weichmacher umfasst, vorzugsweise Triethylcitrat (TEC).

4. Homogene Polymermischung nach einem der vorhergehenden Ansprüche, **dadurch gekennzeichnet, dass** das wenigstens eine andere Polymer Polybutylensuccinat (PBS) ist.

5. Homogene Polymermischung nach Anspruch 4, **dadurch gekennzeichnet, dass** das PBS eine molare Masse (Mn) im Bereich von 30.000 bis 100.000 Da hat, vorzugsweise 50.000 bis 80.000 Da, weiter bevorzugt 60.000 bis 70.000 Da, gemessen mit Größenausschluss-Chromatographie (SEC) in einem Chloroform-Eluent (0.6 ml/min, T= 30° C) unter Verwendung von Styragel HR 4 und 3 Säulen mit einer Vorsäule, Detektieren von Elutionskurven unter Verwendung eines Waters 2414 Brechungsindexdetektor, und Berechnen von molaren Massenverteilungen (MMD) gegen 10 x PS (580 - 3040000 g/mol) Standards, unter Verwendung einer Waters Empower 3 Software.

6. Homogene Polymermischung nach einem der vorhergehenden Ansprüche, **dadurch gekennzeichnet, dass** die Polymerzusammensetzung Zelluloseacetatpropionat (CAP) in einer Menge von 55 bis 80 Gewichts-%, vorzugsweise 60 bis 75 Gewichts-%, weiter bevorzugt 65 bis 75 Gewichts-%, und wenigstens ein anderes Polymer ausgewählt aus der Gruppe bestehend aus Polybutylensuccinat (PBS) und Polypropylensuccinat (PPS) in einer Menge von 20 bis 40 Gewichts-%, vorzugsweise 25 bis 35 Gewichts-%, basierend auf dem Gesamtgewicht der Zusammensetzung umfasst, und optional wenigstens ein Additiv wie zum Beispiel Weichmacher, Pigmente, Stabilisatoren oder andere Additive zur Verwendung in Kunststoffzusammensetzungen.

7. Homogene Polymermischung nach einem der vorhergehenden Ansprüche, **dadurch gekennzeichnet, dass** die Polymerzusammensetzung Zelluloseacetatpropionat in einer Menge von 55 bis 80 Gewichts-%, vorzugsweise 60 bis 75 Gewichts-%, weiter bevorzugt 65 bis 75 Gewichts-%, und Polybutylensuccinat in einer Menge von 20 bis 40 Gewichts-%, vorzugsweise 25 bis 40 Gewichts-%, weiter bevorzugt 25 bis 35 Gewichts-% basierend auf dem Gesamtgewicht der Zusammensetzung umfasst, und optional wenigstens ein Additiv wie zum Beispiel Weichmacher, Pigmente, Stabilisatoren oder andere Additive zur Verwendung in Kunststoffzusammensetzungen.

8. Homogene Polymermischung nach einem der vorhergehenden Ansprüche, **dadurch gekennzeichnet, dass** der Zelluloseester eine zahlengemittelte molare Masse von 30.000 bis 110.000 Da hat, vorzugsweise 50.000 bis 100.000 Da, weiter bevorzugt 65.000 bis 95.000 Da, gemessen mit Größenausschluss-Chromatographie (SEC) in einem Chloroform-Eluent (0.6 ml/min, T= 30° C) unter Verwendung von Styragel HR 4 und 3 Säulen mit einer Vorsäule, Detektieren von Elutionskurven unter Verwendung eines Waters 2414 Brechungsindexdetektor, und Berechnen von molaren Massenverteilungen (MMD) gegen 10 x PS (580 - 3040000 g/mol) Standards, unter Verwendung einer Waters Empower 3 Software.

9. Homogene Polymermischung nach einem der vorhergehenden Ansprüche, **dadurch gekennzeichnet, dass** der Zelluloseester einen Acetylgehalt von 0.8 bis 2.0 Gewichts-%, vorzugsweise 1.0 bis 1.5 Gewichts-% hat, und/oder einen Propionylgehalt von 30 bis 51 Gewichts-%, vorzugsweise 40 bis 50 Gewichts-%, und/oder einen Hydroxylgehalt von 1.0 bis 2.5 Gewichts-%, vorzugsweise 1.5 bis 2.0 Gewichts-%.

10. Homogene Polymermischung nach einem der vorhergehenden Ansprüche, **dadurch gekennzeichnet, dass** die homogene Polymermischung erhalten ist durch eine Schmelzmischverarbeitung des Zelluloseesterpolymers und des wenigstens einen anderen Polymers bei einer Temperatur zwischen 210° C und 300° C, vorzugsweise zwischen 210° C und 270° C, weiter bevorzugt zwischen 210° C und 250° C, noch weiter bevorzugt zwischen 210° C und 225° C.

11. Homogene Polymermischung nach einem der vorhergehenden Ansprüche, **dadurch gekennzeichnet, dass** die Polymerzusammensetzung Silica (SiO₂) in einer Menge von 0.5 Gewichts-% oder weniger umfasst, vorzugsweise in einer Menge von 0.1 Gewichts-% oder weniger.

12. Homogene Polymermischung nach einem der vorhergehenden Ansprüche, **dadurch gekennzeichnet, dass** die homogene Polymermischung, die eine Polymerzusammensetzung gemäß der Erfindung umfasst, eine andere Komponente umfasst, die ausgewählt ist aus der Gruppe bestehend aus einem Zelluloseester, wie zum Beispiel Zelluloseacetat oder Zelluloseacetatbutyrat (CAB), einem aliphatischen oder aliphatisch-aromatischen Polyester, wie zum Beispiel Polybutylensuccinatadipat (PBSA) oder Polybutylenadipatterephthalat (PBAT), ein Polyhydroxyalkanoat (PHA), wie zum Beispiel Polyhydroxybutyrat (PHB), Polymilchsäure (PLA) und Polycaprolacton (PCL).

13. Im Wesentlichen klares und transparentes Material, **dadurch gekennzeichnet, dass** es die homogene Polymermischung umfasst, umfassend eine Polymerzusammensetzung nach einem der Ansprüche 1 bis 12.

14. Verpackungsmaterial, **dadurch gekennzeichnet, dass** es die homogene Polymermischung umfasst, umfassend eine Polymerzusammensetzung nach einem der Ansprüche 1 bis 12.

15. Verpackungsmaterial nach Anspruch 14, **dadurch gekennzeichnet, dass** es Papier- oder Kartonmaterial ist, das mit der homogenen Mischung umfassend eine Polymerzusammensetzung nach einem der Ansprüche 1 bis 12 extrusionsbeschichtet ist.

16. Verpackungsmaterial nach Anspruch 14, **dadurch gekennzeichnet, dass** es ein Spritzgußprodukt ist.

17. Verpackungsmaterial nach Anspruch 14, **dadurch gekennzeichnet, dass** es ein Produkt ist, das durch eine Tiefziehanwendung erzeugt ist.

18. Verpackungsmaterial nach Anspruch 14, **dadurch gekennzeichnet, dass** ein Produkt ist, das durch eine Blasfilmverarbeitung erzeugt ist.

19. Verfahren zur Herstellung eines Verpackungsmaterials, **dadurch gekennzeichnet, dass** das Verfahren die folgenden Schritte umfasst:
a. Schmelzmischen, bei einer Temperatur von wenigstens 210° C, einer Polymerzusammensetzung, umfassend wenigstens ein Zelluloseesterpolymer, welches Zelluloseacetatpropionat (CAP) ist, in einer Menge von 55 bis 95 Gewichts-% und wenigstens eines anderen Polymers, ausgewählt aus der Gruppe bestehend aus Polybutylensuccinat (PBS) und Polypropylensuccinat (PPS), in einer Menge von 5 bis 40 Gewichts-%, wobei die Gesamtmenge des Zelluloseesterpolymers und des wenigstens einen anderen Polymers wenigstens 80 Gewichts-% basierend auf dem Gesamtgewicht der Polymerzusammensetzung ist, um eine homogene Polymermischung zu erhalten,
b. optional Granulieren der homogenen Mischung, um eine granulierte Polymermischung zu erhalten, und
c. Produzieren eines Verpackungsmaterials aus der homogenen Polymermischung und/oder der granulierten Polymermischung.

20. Verfahren nach Anspruch 19, **dadurch gekennzeichnet, dass** die Polymerzusammensetzung in Schritt a. die Polymerzusammensetzung wie in einem der Ansprüche 1 bis 12 definiert ist.

21. Verfahren nach Anspruch 19 oder 20, **dadurch gekennzeichnet, dass** das Schmelzmischen bei einer Temperatur zwischen 210° C und 300° C durchgeführt wird, vorzugsweise zwischen 210° C und 270° C, weiter bevorzugt zwischen 210° C und 250° C, noch weiter bevorzugt zwischen 210° C und 225° C.

22. Verfahren nach Anspruch 19, 20 oder 21, **dadurch gekennzeichnet, dass** das Schmelzmischen bei einer Zeitperiode von wenigstens 10 Sek. durchgeführt wird, vorzugweise wenigstens 30 Sek., weiter bevorzugt 1 Min. bis 5 Std., beispielsweise 2 Min. bis 1 Std.

23. Verfahren nach einem der Ansprüche 19 bis 22, **dadurch gekennzeichnet, dass** das Produzieren eines Verpackungsmaterials aus der homogenen Polymermischung und/oder der granulierten Polymermischung bei einer Temperatur von wenigstens 200° C durchgeführt wird, vorzugsweise wenigstens 210° C, und weiter bevorzugt zwischen 210° C und 500° C.

24. Verfahren nach einem der Ansprüche 19 bis 23, **dadurch gekennzeichnet, dass** das Produzieren eines Verpackungsmaterials aus der homogenen Polymermischung und/oder der granulierten Polymermischung durchgeführt wird durch Extrusionsbeschichten eines Papier- oder Kartonmaterials mit der homogenen Mischung, umfassend eine Polymerzusammensetzung nach einem der Ansprüche 1 bis 12, wobei die Extrusionsbeschichtung bei einer Temperatur von 200° C bis 300° C durchgeführt wird, vorzugsweise 210° C bis 260° C, am stärksten bevorzugt 225° C bis 250° C.

25. Verfahren nach Anspruch 24, **dadurch gekennzeichnet, dass** die homogene Polymermischung eine Polymerzusammensetzung umfasst, umfassend Zelluloseesterpolymer in einer Menge von 60 bis 90 Gewichts-%, vorzugsweise 60 bis 75 Gewichts-%, und wenigstens ein anderes Polymer in einer Menge von 10 bis 40 Gewichts-%, vorzugsweise 25 bis 40 Gewichts-% basierend auf dem Gesamtgewicht der Polymerzusammensetzung, und optional Additive.

26. Verfahren nach einem der Ansprüche 19 bis 23, **dadurch gekennzeichnet, dass** das Produzieren einens Verpackungsmaterials aus der homogenen Polymermischung und/oder der granulierten Polymermischung durch Spritzgießen durchgeführt wird, wobei das Spritzgießen bei einer Temperatur von 200° C bis 300° C, vorzugsweise 200° C bis 250° C, am meisten bevorzugt 210° C bis 230° C durchgeführt wird.

27. Verfahren nach Anspruch 26, **dadurch gekennzeichnet, dass** die homogene Polyermischung eine Polymerzusammensetzung umfasst, umfassend Zelluloseesterpolymer in einer Menge von 60 bis 95 Gewichts-%, vorzugsweise 65 bis 90 Gewichts-%, und wenigstens ein anderes Polymer in einer Menge von 5 bis 40 Gewichts-%, vorzugsweise 10 bis 35 Gewichts-% basierend auf der Gesamtmenge der Polymerzusammensetzung.

28. Verfahren nach einem der Ansprüche 19 bis 23, **dadurch gekennzeichnet, dass** das Produzieren eines Verpackungsmaterials aus der homogenen Polymermischung und/oder der granulierten Polymermischung durch eine Tiefziehanwendung durchgeführt wird, wobei die Tiefziehanwendung bei einer Temeperatur von 200° C bis 500° C durchgeführt wird.

29. Verfahren nach Anspruch 28, **dadurch gekennzeichnet, dass** die homogene Polymermischung eine Polymerzusammensetzung umfasst, umfassend Zelluloseesterpolymer in einer Menge von 50 bis 95 Gewichts-%, vorzugsweise 60 bis 85 Gewichts-%, und wenigstens ein anderes Polymer in einer Menge von 5 bis 50 Gewichts-%, vorzugsweise 15 bis 40 Gewichts-% basierend auf dem Gesamtgewicht der Polymerzusammensetzung, und optional Additive.

30. Verfahren nach einem der Ansprüche 19 bis 23, **dadurch gekennzeichnet, dass** das Produzieren eines Verpackungsmaterials aus der homogenen Polymermischung und/oder der granulierten Polymermischung durch eine Blasfilmverarbeitung durchgeführt wird, wobei die Blasfilmverarbeitung bei einer Temperatur von 200° C und 250° C durchgeführt wird, vorzugsweise zwischen 210° C und 230° C.

31. Verfahren nach Anspruch 30, **dadurch gekennzeichnet, dass** die homogene Polymermischung eine Polymerzusammensetzung umfasst, umfassend Zelluloseesterpolymer in einer Menge von 60 bis 90 Gewichts-%, vorzugsweise 60 bis 75 Gewichts-%, und wenigstens ein anderes Polymer in einer Menge von 10 bis 40 Gewichts-%, vorzugsweise 25 bis 40 Gewichts-% basierend auf dem Gesamtgewicht der Polymerzusammensetzung, und optional Additive.

32. Verfahren nach einem der Ansprüche 19 bis 23, **dadurch gekennzeichnet, dass** das Produzieren eines Verpackungsmaterials aus der homogenen Polymermischung und/oder der granulierten Polymermischung durch eine Foliengießverarbeitung durchgeführt wird, wobei die Foliengießverarbeitung bei einer Temperatur von 200° C und 250° C durchgeführt wird, vorzugsweise zwischen 200° C und 230° C, weiter bevorzugt zwischen 210 und 225° C.

33. Verfahren nach Anspruch 32, **dadurch gekennzeichnet, dass** die homogene Polymermischung eine Polymerzusammensetzung umfasst, umfassend Zelluloseesterpolymer in einer Menge von 60 bis 95 Gewichts-%, vorzugsweise 70 bis 95 Gewichts-%, und wenigstens ein anderes Polymer in einer Menge von 5 bis 40 Gewichts-%, vorzugsweise 5 bis 30 Gewichts-% basierend auf der Gesamtmenge der Polymerzusammensetzung, und optional Additive.

34. Verfahren nach einem der Ansprüche 19 bis 23, **dadurch gekennzeichnet, dass** das Verfahren ein Produzieren eines Verpackungsmaterials unter Verwendung eines Verfahrens umfasst, das ausgewählt ist aus der Gruppe bestehend aus: Blasfilmverarbeitung, Foliengießverarbeitung, Spritzgießen, Kalandrieren, Extrusionsblasformen, Filmextrusion, Spritzblasformen, gasunterstütztes Spritzgießen, Spritz-Streckblasformen, Laminieren, Rotationsformen, Tiefziehanwendungen, 3D-Druck, Thermoformen und Vakuumformen, vorzugsweise Blasfilmverarbeitung, Foliengießverarbeitung oder Spritzgießen, vorzugsweise Spritzgießen, Extrusionsblasformen, Blasfilmverarbeitung, Filmextrusion oder eine Tiefziehanwendung.

35. Verpackungsmaterial nach den Ansprüchen 14 bis 18, erhalten durch das Verfahren nach einem der Ansprüche 19 bis 34.

36. Verwendung der homogenen Mischung, umfassend eine Polymerzusammensetzung nach einem der Ansprüche 1 bis 12, für die Herstellung eines Verpackungsmaterials, ausgewählt beispielsweise aus Frischhaltefolie, Schrumpffolie, Stretchfolie, Beutelfolie oder Behälterauskleidung, Folien für Verbraucherverpackungen (beispielsweise Verpackungsfolie für Tiefkühlprodukte, Schrumpffolie für Transportverpackung, Lebensmittelverpackungsfolie, Verpackungsbeutel, oder Form-, Füll- und Siegelverpackungsfolie), Laminierungsfolie (beispielsweise Laminieren von Aluminium oder Papier, das beispielsweise zum Verpacken von Milch oder Kaffee verwendet wird), Barrierefolie (beispielsweise Folie, die als eine Aroma- oder Sauerstoffbarriere wirkt und zur Verpackung von Lebensmitteln verwendet wird, beispielsweise kalten Fleischprodukten und Käse), Folien für die Verpackung von medizinischen Produkten, landwirtschaftliche Folie (beispielsweise Gewächshausfolie, Ernteverfrühungsfolie, Silagefolie, Silagestretchfolie), Extrusionsbeschichtungsanwendungen, Beutel, Boxen, Behälter, Hüllen, Gehäuse oder geformte 3D-Objekte, und/oder andere Anwendungen beim Verpacken von Waren, wie zum Beispiel Lebensmittel, medizinische Produkte oder Kosmetika.

## Revendications

1. Mélange polymère homogène comprenant une composition polymère, **caractérisé en ce que** ladite composition comprend au moins un polymère d'ester de cellulose, qui est l'acétate-propionate de cellulose (CAP), dans une quantité de 55 à 95% en poids, et au moins un autre polymère, qui est choisi dans le groupe constitué par le polybutylène succinate (PBS) et le polypropylène succinate (PPS), dans une quantité de 5 à 40% en poids, dans lequel la quantité totale dudit polymère d'ester de cellulose et dudit au moins un autre polymère est d'au moins 80% en poids sur la base du poids total de la composition polymère, obtenue en traitant ladite composition polymère à une température d'au moins 210°C.

2. Mélange polymère homogène selon la revendication 1 **caractérisé en ce que** la quantité totale dudit polymère d'ester de cellulose et dudit au moins un autre polymère est d'au moins 85% en poids, de préférence au moins 90% en poids, de manière plus préférée d'au moins 95% en poids, sur la base du poids total de la composition polymère, le reste étant d'autres polymères et / ou additifs tels que des assouplissants, des pigments, des stabilisants ou d'autres additifs pour utilisation dans des compositions plastiques.

3. Mélange polymère homogène selon l'une quelconque des revendications précédentes, **caractérisé en ce que** ladite composition polymère comprend au moins un assouplissant, de préférence du citrate de triéthyle (TEC).

4. Mélange polymère homogène selon l'une quelconque des revendications précédentes, **caractérisé en ce que** ledit au moins un autre polymère est le polybutylène succinate (PBS).

5. Mélange polymère homogène selon la revendication 4, **caractérisé en ce que** ledit PBS a une masse molaire (Mn) dans la gamme de 30 000 à 100 000 Da; de préférence de 50 000 à 80 000 Da; de manière plus préférée de 60000 à 70000 Da, mesurés par chromatographie d'exclusion de taille (SEC) dans un éluant chloroforme (0,6 ml/min, T = 30°C) en utilisant des colonnes Styragel HR 4 et 3 avec une pré-colonne, détection des courbes d'élution en utilisant un détecteur d'indice de réfraction Waters 2414 et calcul des distributions de masse molaire (MMD) par rapport aux standards 10 x PS (580 - 3040000 g / mol), en utilisant le logiciel Waters Empower 3.

6. Mélange polymère homogène selon l'une quelconque des revendications précédentes, **caractérisé en ce que** ladite composition polymère comprend de l'acétate-propionate de cellulose (CAP) dans une quantité de 55 à 80% en poids, de préférence de 60 à 75% en poids, de manière plus préférée de 65 à 75 % en poids, et au moins un autre polymère choisi dans le groupe constitué du polybutylène succinate (PBS) et du polypropylène succinate (PPS) dans une quantité de 20 à 40% en poids, de préférence de 25 à 35% en poids, sur la base du total poids de la composition, et optionnellement au moins un additif tel que des assouplissants, des pigments, des stabilisants ou d'autres additifs pour utilisation dans des compositions plastiques.

7. Mélange polymère homogène selon l'une quelconque des revendications précédentes, **caractérisé en ce que** ladite composition polymère comprend de l'acétate propionate de cellulose en une quantité de 55 à 80% en poids, de préférence de 60 à 75% en poids, de manière plus préférée de 65 à 75% en poids, et du polybutylène succinate en une quantité de 20 à 40% en poids, de préférence de 25 à 40% en poids, de manière plus préférée de 25 à 35% en poids, sur la base du poids total de la composition, et éventuellement d'au moins un additif tel que assouplissants, pigments, stabilisants ou autres additifs à utiliser dans des compositions plastiques.

8. Mélange polymère homogène selon l'une quelconque des revendications précédentes, **caractérisé en ce que** l'ester de cellulose a une masse molaire moyenne en nombre de 30 000 à 110 000 Da; de préférence de 50 000 à 100 000 Da; de manière plus préférée de 65000 à 95000 Da, mesurée par chromatographie d'exclusion stérique (SEC) dans un éluant chloroforme (0,6 ml / min, T = 30°C) en utilisant des colonnes Styragel HR 4 et 3 avec une pré-colonne, détection des courbes d'élution en utilisant un détecteur d'indice de réfraction Waters 2414 et calcul des distributions de masse molaire (MMD) par rapport aux standards 10 x PS (580 - 3040000 g / mol), en utilisant le logiciel Waters Empower 3.

9. Mélange polymère homogène selon l'une quelconque des revendications précédentes, **caractérisé en ce que** l'ester de cellulose a une teneur en acétyle de 0,8 à 2,0% en poids, de manière plus préférée de 1,0 à 1,5% en poids, et / ou une teneur en propionyle de 30 à 51 % en poids, de manière plus préférée 40 à 50% en poids, et / ou une teneur en hydroxyle de 1,0 à 2,5% en poids, de manière plus préférée de 1,5 à 2,0% en poids.

10. Mélange polymère homogène selon l'une quelconque des revendications précédentes, **caractérisé en ce que** le mélange polymère homogène est obtenu par traitement en mélangeant à l'état fondu ledit polymère d'ester de cellulose et ledit au moins un autre polymère à une température comprise entre 210°C et 300°C, de préférence entre 210°C et 270°C, de manière plus préférée entre 210°C et 250°C, de manière encore plus préférée entre 210°C et 225°C.

11. Mélange polymère homogène selon l'une quelconque des revendications précédentes, **caractérisé en ce que** la composition de polymère comprend de la silice (SiO₂) en une quantité de 0,5% en poids ou moins, de préférence en une quantité de 0,1% en poids ou moins.

12. Mélange polymère homogène selon l'une quelconque des revendications précédentes, **caractérisé en ce que** le mélange polymère homogène comprenant une composition polymère selon l'invention comprend un autre composant, qui est choisi dans le groupe constitué par un ester de cellulose, tel que l'acétate de cellulose ou l'acétate butyrate de cellulose (CAB), un polyester aromatique aliphatique ou aliphatique, tel que le polybutylène succinate adipate (PBSA) ou le polybutylène adipate téréphtalate (PBAT), un polyhydroxyalcanoate (PHA), tel que le polyhydroxybutyrate (PHB), l'acide polylactique (PLA), et le polycaprolactone (PCL).

13. Matériau sensiblement clair et transparent, **caractérisé en ce qu'**il comprend le mélange polymère homogène comprenant une composition polymère selon l'une quelconque des revendications 1 à 12.

14. Matériau d'emballage, **caractérisé en ce qu'**il comprend le mélange polymère homogène comprenant une composition polymère selon l'une quelconque des revendications 1 à 12.

15. Matériau d'emballage selon la revendication 14, **caractérisé en ce qu'**il s'agit d'un matériau extrudé en papier ou en carton enduit du mélange homogène comprenant une composition polymère selon l'une quelconque des revendications 1 à 12.

16. Matériau d'emballage selon la revendication 14, **caractérisé en ce qu'**il s'agit d'un produit moulé par injection.

17. Matériau d'emballage selon la revendication 14, **caractérisé en ce qu'**il s'agit d'un produit fabriqué par application d'emboutissage profond.

18. Matériau d'emballage selon la revendication 14, **caractérisé en ce qu'**il s'agit d'un produit fabriqué par traitement de film par soufflage.

19. Procédé de fabrication d'un matériau d'emballage, **caractérisé en ce que** le procédé comprend les étapes suivantes:
a. mélange à l'état fondu, à une température d'au moins 210 °C, d'une composition polymère comprenant au moins un polymère d'ester de cellulose, qui est l'acétate-propionate de cellulose (CAP), dans une quantité de 55 à 95% en poids et au moins un autre polymère choisi dans le groupe constitué par le polybutylène succinate (PBS) et le polypropylène succinate (PPS), dans une quantité de 5 à 40% en poids, dans lequel la quantité totale dudit polymère d'ester de cellulose et dudit au moins un autre polymère est d'au moins 80% en poids par rapport au poids total de la composition polymère, pour obtenir un mélange polymère homogène,
b. granuler optionnellement le mélange homogène pour obtenir un mélange polymère granulé, et
c. produire un matériau d'emballage à partir dudit mélange polymère homogène et / ou dudit mélange polymère granulé.

20. Procédé selon la revendication 19, **caractérisé en ce que** la composition polymère à l'étape a. est la composition polymère telle que définie dans l'une quelconque des revendications 1 à 12.

21. Procédé selon la revendication 19 ou 20, **caractérisé en ce que** le mélange à l'état fondu est effectué à une température comprise entre 210°C et 300°C, de préférence entre 210°C et 270°C, de manière plus préférée entre 210°C et 250°C, de manière encore plus préférée entre 210°C et 225°C.

22. Procédé selon la revendication 19, 20 ou 21, **caractérisé en ce que** le mélange à l'état fondu est effectué pendant une durée d'au moins 10 secondes, de préférence au moins 30 secondes, plus préférablement de 1 minutes à 5 heures, par exemple 2 minutes à 1 heure.

23. Procédé selon l'une quelconque des revendications 19 à 22, **caractérisé en ce que** la production d'un matériau d'emballage à partir dudit mélange polymère homogène et/ou dudit mélange polymère granulé est effectuée à une température d'au moins 200°C, de préférence d'au moins 210°C, et de manière plus préférée entre 210°C et 500°C.

24. Procédé selon l'une quelconque des revendications 19 à 23, **caractérisé en ce que** la production d'un matériau d'emballage à partir dudit mélange polymère homogène et/ou dudit mélange polymère granulé est effectuée par revêtement par extrusion d'un matériau en papier ou en carton avec le mélange homogène comprenant une composition polymère selon l'une quelconque des revendications 1 à 12, dans lequel le revêtement par extrusion est réalisé à une température de 200°C à 300°C, de préférence de 210°C à 260°C, de manière préférée entre toutes de 225°C à 250°C.

25. Procédé selon la revendication 24, **caractérisé en ce que** ledit mélange polymère homogène comprend une composition polymère comprenant un polymère d'ester de cellulose en une quantité de 60 à 90% en poids, de manière plus préférée de 60 à 75% en poids, et au moins un autre polymère en une quantité de 10 à 40% en poids, de manière plus préférée de 25 à 40% en poids sur la base du poids total de la composition polymère, et optionnellement des additifs.

26. Procédé selon l'une quelconque des revendications 19 à 23, **caractérisé en ce que** la production d'un matériau d'emballage à partir dudit mélange polymère homogène et/ou dudit mélange polymère granulé est effectuée par moulage par injection, dans lequel le moulage par injection est effectué à une température de 200°C à 300°C, de préférence de 200°C à 250°C, le de manière plus préférée de 210°C à 230°C.

27. Procédé selon la revendication 26, **caractérisé en ce que** ledit mélange polymère homogène comprend une composition polymère comprenant un polymère d'ester de cellulose en une quantité de 60 à 95% en poids, de manière plus préférée de 65 à 90% en poids, et au moins un autre polymère en une quantité de 5 à 40% en poids, de manière plus préférée de 10 à 35% en poids sur la base du poids total de la composition polymère.

28. Procédé selon l'une quelconque des revendications 19 à 23, **caractérisé en ce que** la production d'un matériau d'emballage à partir dudit mélange polymère homogène et/ou dudit mélange polymère granulé est effectuée par application d'emboutissage profond, dans laquelle l'application d'emboutissage profond est effectuée à une température de 200°C à 500°C.

29. Procédé selon la revendication 28, **caractérisé en ce que** ledit mélange polymère homogène comprend une composition polymère comprenant un polymère d'ester de cellulose en une quantité de 50 à 95% en poids, de manière plus préférée de 60 à 85% en poids, et au moins un autre polymère en une quantité de 5 à 50% en poids, de manière plus préférée de 15 à 40% en poids sur la base du poids total de la composition polymère, et éventuellement des additifs.

30. Procédé selon l'une quelconque des revendications 19 à 23, **caractérisé en ce que** la production d'un matériau d'emballage à partir dudit mélange de polymères homogènes et/ou dudit mélange de polymères granulés est effectuée par un traitement de film par soufflage, dans lequel le traitement de film par soufflage est effectué à une température de 200°C et 250°C, de préférence entre 210°C et 230°C.

31. Procédé selon la revendication 30, **caractérisé en ce que** ledit mélange polymère homogène comprend une composition polymère comprenant un polymère d'ester de cellulose en une quantité de 60 à 90% en poids, de manière plus préférée de 60 à 75% en poids, et au moins un autre polymère en une quantité de de 10 à 40% en poids, de manière plus préférée de 25 à 40% en poids sur la base du poids total de la composition polymère, et éventuellement des additifs.

32. Procédé selon l'une quelconque des revendications 19 à 23, **caractérisé en ce que** la production d'un matériau d'emballage à partir dudit mélange polymère homogène et/ou dudit mélange polymère granulé est effectuée par un traitement film coulé, dans lequel le traitement film coulé est effectué à une température de 200°C et 250°C, de préférence entre 200°C et 230°C, de manière plus préférée entre 210 et 225°C.

33. Procédé selon la revendication 32, **caractérisé en ce que** ledit mélange polymère homogène comprend une composition polymère comprenant un polymère d'ester de cellulose en une quantité de 60 à 95% en poids, de manière plus préférée de 70 à 95% en poids, et au moins un autre polymère en une quantité de 5 à 40% en poids, de manière plus préférée de 5 à 30% en poids sur la base du poids total de la composition polymère, et optionnellement des additifs.

34. Procédé selon l'une quelconque des revendications 19 à 23, **caractérisé en ce que** le procédé comprend la production d'un matériau d'emballage en utilisant un procédé choisi dans le groupe constitué de; traitement de film par soufflage, traitement film coulé, moulage par injection, calandrage, moulage par extrusion-soufflage, extrusion de film, moulage par injection-soufflage, moulage par injection assisté par gaz, moulage par injection-soufflage-étirage, laminage, moulage par rotation, application d'emboutissage profond, impression 3D, thermoformage et formage sous vide, de préférence traitement de film par soufflage, traitement film coulé, ou moulage par injection, de préférence moulage par injection, moulage par extrusion-soufflage, traitement de film par soufflage, extrusion de film ou une application d'emboutissage profond.

35. Matériau d'emballage selon l'une quelconque des revendications 14 à 18 obtenu par le procédé selon l'une quelconque des revendications 19 à 34.

36. Utilisation du mélange homogène comprenant une composition polymère selon l'une quelconque des revendications 1 à 12 pour la fabrication d'un matériau d'emballage, choisi par exemple parmi un film étirable, un film rétractable, un film étirable, un film pour sac ou des doublures de conteneurs, des films destinés au emballage pour consommateur (par exemple, film d'emballage pour produits surgelés, film rétractable pour emballage de transport, film d'emballage alimentaire, sacs d'emballage, ou film d'emballage pour formage, remplissage et scellage), film laminé (par exemple, laminé d'aluminium ou de papier utilisé pour l'emballage, par exemple du lait ou du café), un film barrière (par exemple un film agissant comme une barrière à un arôme ou à l'oxygène utilisé pour emballer des aliments, par exemple des viandes et du fromage), des films pour l'emballage de produits médicaux, un film agricole (par exemple un film pour serre, un film de forçage des cultures, un film d'ensilage, un film étirable d'ensilage), des applications de revêtement par extrusion, des sacs, des boîtes, des conteneurs, des enveloppes, des boîtiers ou des objets 3D moulés et/ou d'autres applications dans des produits d'emballage, tels que des aliments, des produits médicaux ou des cosmétiques.
